(19) Europäisches Patentamt
European Patent Office
Office européen des brevets

(11) **EP 4 432 376 A2**

(12) **EUROPEAN PATENT APPLICATION**

(43) Date of publication:
**18.09.2024 Bulletin 2024/38**

(21) Application number: **24155186.0**

(22) Date of filing: **01.02.2024**

(51) International Patent Classification (IPC):
**H01M 4/02** (2006.01)    **H01M 4/58** (2010.01)
**H01M 4/131** (2010.01)    **H01M 4/62** (2006.01)

(52) Cooperative Patent Classification (CPC):
**H01M 4/02; H01M 4/131; H01M 4/58; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023   KR 20230033773**

(71) Applicant: **Samsung SDI Co., Ltd.**
**Yongin-si, Gyeonggi-do 17084 (KR)**

(72) Inventors:
• **SHIM, Kyueun**
  **17084 Yongin-si (KR)**
• **JO, Sungnim**
  **17084 Yongin-si (KR)**
• **SON, Inhyuk**
  **17084 Yongin-si (KR)**
• **MAH, Sangkook**
  **17084 Yongin-si (KR)**

(74) Representative: **Marks & Clerk LLP**
**15 Fetter Lane**
**London EC4A 1BW (GB)**

(54) **COMPOSITE CATHODE ACTIVE MATERIAL, CATHODE AND LITHIUM BATTERY CONTAINING THE COMPOSITE CATHODE ACTIVE MATERIAL, AND METHOD OF PREPARING THE COMPOSITE CATHODE ACTIVE MATERIAL**

(57)    Provided are a composite cathode material, a cathode and a lithium battery which include the same, and a method of manufacturing the composite cathode active material. The composite cathode active material includes: a $1^{st}$ core including a first lithium transition metal oxide; a $2^{nd}$ core including a second lithium transition metal oxide; and a shell over a surface of at least one selected from the $1^{st}$ core and the $2^{nd}$ core, wherein the shell includes at least one first metal oxide, a first carbon-based material, and a second carbon-based material, wherein the first metal oxide is included inside a matrix of the first carbon-based material, the first metal oxide is represented by Formula $M_aO_b$ ($0<a\leq3$ and $0<b<4$, wherein if a is 1, 2, or 3, b is not an integer), wherein M is at least one metal selected from Group 2 to Group 13, Group 15, and Group 16 of the Periodic Table of the Elements, the second carbon-based material includes a fibrous carbon-based material having an aspect ratio of at least 10, and the first lithium transition metal oxide and the second lithium transition metal oxide have different particle diameters from each other.

FIG. 1

**Description**

**BACKGROUND**

**1. Field**

One or more embodiments of the present disclosure relate to a composite cathode active material, a cathode and a lithium battery which use the same, and a method of preparing the composite cathode active material.

**2. Description of Related Art**

In order to meet the conditions of miniaturization and high performance of various devices, high energy density in addition to miniaturization and reduced weight of lithium batteries has become important. For example, high-capacity lithium batteries are becoming increasingly important.

To implement lithium batteries that meet the above conditions, electrode materials with high capacity are being considered.

Electrode materials in the art have deteriorated lifespan characteristics and poor thermal stability due to side reactions.

Therefore, there is a desire to develop a method of preventing or reducing deterioration of battery performance while including electrode materials.

**SUMMARY**

One or more embodiments of the present disclosure include a composite cathode active material capable of preventing or reducing deterioration in lifespan due to an increase in resistance by suppressing or reducing side reactions of the composite cathode active material.

One or more embodiments include a cathode including the composite cathode active material.

One or more embodiments include a lithium battery using the cathode.

One or more embodiments include a method of preparing a composite cathode active material.

Additional aspects of embodiments will be set forth in part in the description which follows and, in part, will be apparent from the description, or may be learned by practice of the presented embodiments of the disclosure.

According to one or more embodiments, a composite cathode active material includes: a $1^{st}$ core including a first lithium transition metal oxide;

a $2^{nd}$ core including a second lithium transition metal oxide; and
a shell over the surface of at least one selected from the $1^{st}$ core and the $2^{nd}$ core, wherein:

the shell includes at least one first metal oxide, a first carbon-based material, and a second carbon-based material,
the first metal oxide is included within a matrix of the first carbon-based material,
the first metal oxide is represented by Formula $M_aO_b$ ($0<a\leq3$ and $0<b<4$ where if a is 1, 2, or 3, b is not an integer, e.g., b is not a whole number), where M is at least one metal selected from Group 2 to Group 13, Group 15, and Group 16 of the Periodic Table of the Elements (e.g. at least one metal selected from Group 13),
the second carbon-based material includes a fibrous carbon-based material having an aspect ratio of at least 10, and
the first lithium transition metal oxide and the second lithium transition metal oxide have different particle diameters.

According to one or more embodiments,
a cathode includes the composite cathode active material.

According to one or more embodiments,
a lithium battery includes the cathode.

According to one or more embodiments, a method of preparing a composite cathode active material includes:

providing a first lithium transition metal oxide; providing a second lithium transition metal oxide; providing a composite; providing a second carbon-based material;
obtaining a $1^{st}$ core/shell structure by mechanically milling the first lithium transition metal oxide, the composite, and the second carbon-based material together;

obtaining a 2nd core/shell structure by mechanically milling the second lithium transition metal oxide, the composite, and the second carbon-based material together; and

obtaining a composite cathode active material by mixing together the 1st core/shell structure and the 2nd core/shell structure,

the composite includes: at least one first metal oxide represented by Formula $M_aO_b$ (0<a≤3 and 0<b<4 where if a is 1, 2, or 3, b is not an integer, e.g., b is not a whole number); and a first carbon-based material,

the first metal oxide is inside the matrix of the first carbon-based material, M is at least one metal selected from Group 2 to Group 13, Group 15, and Group 16 of the Periodic Table of the Elements (e.g. at least one metal selected from Group 13), and

the second carbon-based material includes fibrous carbon having an aspect ratio of at least 10, and the first lithium transition metal oxide and the second lithium transition metal oxide have different particle diameters.

At least some of the above and other features of the invention are set out in the claims.

## BRIEF DESCRIPTION OF THE DRAWINGS

The above and other aspects and features of certain embodiments of the disclosure will be more apparent from the following description taken in conjunction with the accompanying drawings, in which:

FIG. 1 shows a schematic cross-sectional view of particles of a composite cathode active material according to an embodiment;

FIG. 2 shows a scanning electron microscope image of the surface of composite cathode active material particles prepared in Example 2;

FIG. 3A shows a scanning electron microscope image showing the shape of a bimodal polycrystalline cathode active material used as a starting material in Example 1;

FIG. 3B shows a schematic diagram of a cross-section of single-crystal first lithium transition metal oxide particles used in Comparative Example 1;

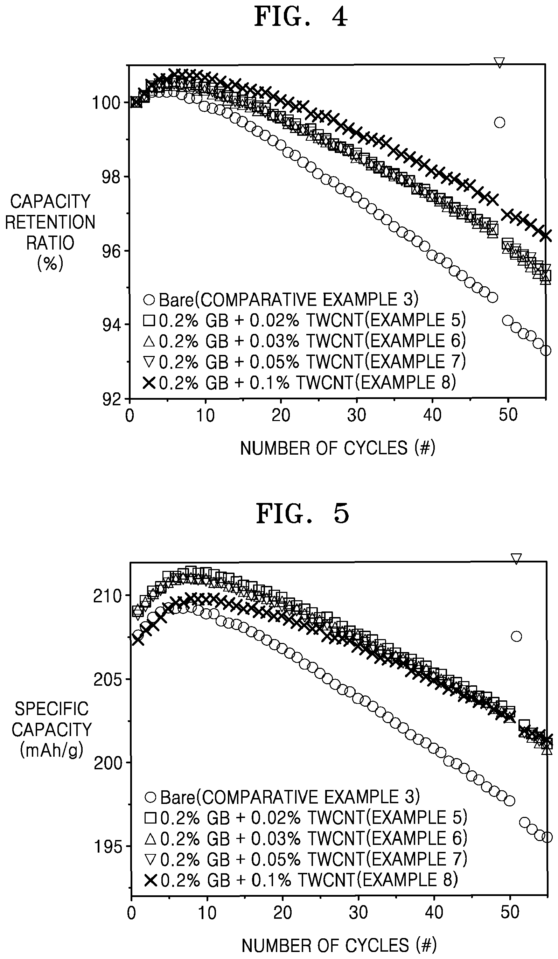

FIG. 4 shows a change in capacity retention ratio according to the number of cycles of lithium batteries according to Examples 5-8 and Comparative Example 3;

FIG. 5 shows a change in specific capacity according to the number of cycles of lithium batteries according to Examples 5-8 and Comparative Example 3;

FIG. 6 shows a schematic diagram of a lithium battery according to an embodiment;

FIG. 7 shows a schematic diagram of a lithium battery according to an embodiment;

FIG. 8 shows a schematic diagram of a lithium battery according to an embodiment;

FIG. 9 shows X-ray photoelectron spectroscopy (XPS) spectra of a composite prepared in Preparation Example 1, NMX of Comparative Example 1, and a composite cathode active material prepared in Example 1;

FIG. 10 shows Raman spectrum analysis results of a composite prepared in Preparation Example 1 and a composite cathode active material prepared in Example 1;

FIG. 11A shows a schematic diagram showing the shape of plate particles; and

FIG. 11B shows a diagram illustrating the definition of a radial shape in secondary particles of a nickel-based active material according to an embodiment.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," if preceding a list of elements, modify the entire list of elements and do not modify the individual elements of the list.

The subject matter of the present disclosure described hereinafter may be modified in various suitable ways, and may have many examples, and thus, certain examples are illustrated in the drawings, and are described in more detail in the specification. The present disclosure may, however, should not be construed as limited to the example embodiments set forth herein, and rather, should be understood as covering all modifications, equivalents, and/or alternatives falling within the scope of the present disclosure.

The terms used herein is for the purpose of describing example embodiments only, and is not intended to be limiting the present disclosure. An expression used in the singular encompasses the expression of the plural, unless it has a clearly different meaning in the context. It will be further understood that the terms "comprises" and/or "comprising," or "includes" and/or "including" if used in this specification, specify the presence of stated features, regions, integers, steps, operations, elements, and/or components, but do not preclude the presence or addition of one or more other features, regions, integers, steps, operations, elements, components, and/or groups thereof. The sign "/" used herein may be interpreted as "and", or as "or" depending on the context.

In the drawings, thicknesses may be magnified or exaggerated to clearly illustrate various layers and regions. Like reference numbers may refer to like elements throughout the drawings and the following description. It will be understood that if one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element.

The "particle diameter" of a particle used herein refers to the average diameter if the particle is spherical, and refers to the average length of the major axis if the particle is non-spherical." The particle diameter of the particles can be measured using a particle size analyzer (PSA) or an electron microscope. The "particle diameter" of a particle refers to the average particle diameter. An average particle diameter is, for example, a median particle diameter (D50). The median particle diameter (D50) is the particle size corresponding to the 50% cumulative value on the cumulative distribution curve of particle size, where particles are accumulated in the order of particle size from the smallest to the largest. A cumulative value may be, for example, a cumulative volume. The median particle diameter (D50) may be measured by, for example, a laser diffraction method. Average lengths (e.g. average major axis length, average minor axis length) and average thicknesses may be measured by using the same methods as measuring the "particle diameter".

The "aspect ratio" used herein may refer to the average aspect ratio and may be determined from SEM images.

Hereinafter, a composite cathode active material according to example embodiments, a cathode and a lithium battery including the same, and a preparing method thereof will be described in more detail.

The composite cathode active material includes a core containing a lithium transition metal oxide, and a shell arranged along the surface of the core. The core includes a first lithium transition metal oxide and a second lithium transition metal oxide. The shell includes at least one type of first metal oxide represented by Formula $M_aO_b$ ($0<a\leq3$ and $0<b<4$ where if a is 1, 2, or 3, b is not an integer), a first carbon-based material, and a second carbon-based material. The first metal oxide is arranged within the matrix of the first carbon-based material, and M is at least one metal selected from Group 2 to Group 13, Group 15, and Group 16 of the Periodic Table of the Elements (e.g. at least one metal selected from Group 13). The second carbon-based material includes fibrous carbon with an aspect ratio of at least 10.

Each of the first lithium transition metal oxide and the second lithium transition metal oxide may include a secondary particle including a plurality of primary particles.

The first lithium transition metal oxide may be a large-diameter lithium transition metal oxide having a particle diameter which is greater than that of the second lithium transition metal oxide, and

the second lithium transition metal oxide may be a small-diameter lithium transition metal oxide having a particle diameter which is smaller than that of the first lithium transition metal oxide.

The first lithium transition metal oxide and the second lithium transition metal oxide may each have a polycrystalline structure.

The following is an explanation of a theoretical basis for the superior performance of the composite cathode active material according to an embodiment, but the present disclosure is not limited thereto. The following is provided to aid in the understanding of the subject matter of the present disclosure, and is not intended to limit the present disclosure in any way.

To improve the mixture density of the cathode, it is desirable to reduce the amount of the conductive material that occupies a large volume in the electrode. If the content of the conductive material is reduced, side reactions of the cathode due to the conductive network defect are increased, which may lead to an increase in resistance, thereby causing lifespan deterioration. Therefore, to address these issues, there is a desire for technology development that can be used to form a cathode surface protection film for an effective conductive network and a decrease in side reactions while a small amount of conductive additives is used.

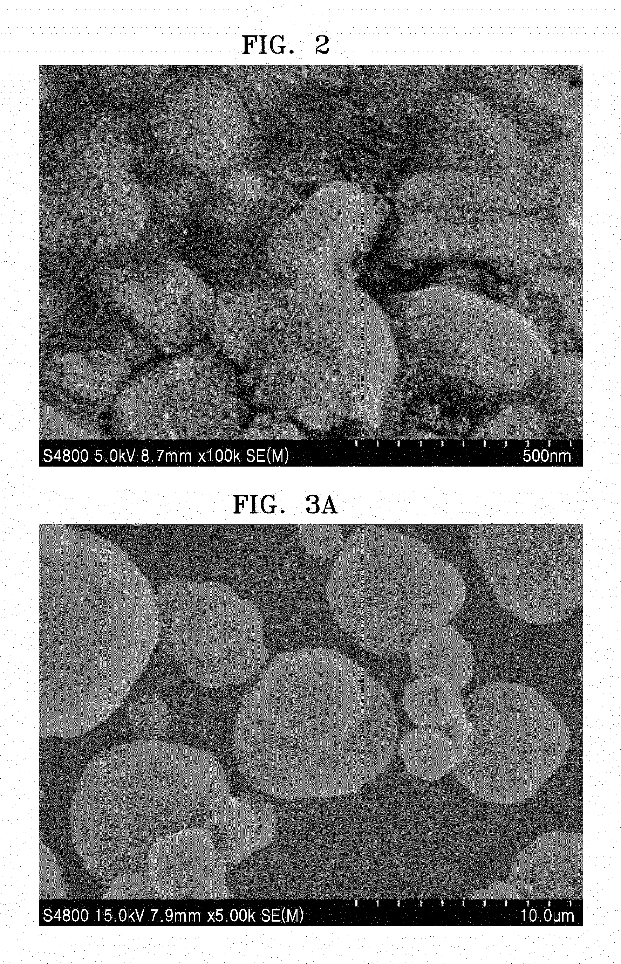

Moreover, in embodiments where low-cost cobalt-free lithium transition metal oxides are used as the cathode active material, as shown in FIG. 3A, a bimodal cathode active material including polycrystalline large and small particles is used to reduce the resistance and increase the surface area of the cathode active material, thus improving the high-rate characteristics of lithium-ion batteries.

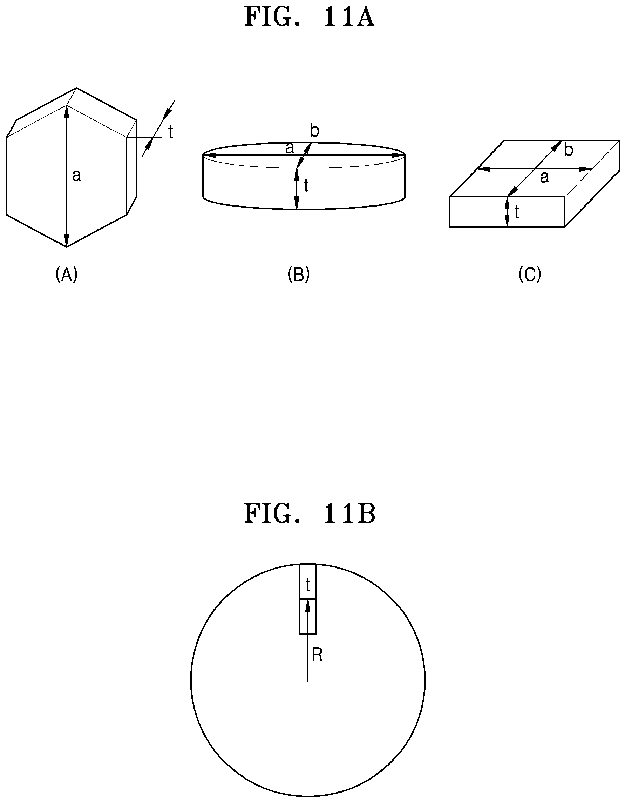

The term "polycrystalline" used herein refers to a term contrasting with 'single crystal,' and refers to a secondary particle that has a crystalline structure and is an aggregate of a plurality of primary particles. "Polycrystalline" refers to a particle having crystallinity while having a radial structure, for example. The polycrystalline structure may include plate primary particles. As shown in FIG. 11A, the plate primary particle refers to a structure having a length t in one axial direction (e.g., thickness direction) smaller than a major axial length a in the other direction (e.g., longitudinal direction).

FIG. 11A shows a schematic diagram showing example shapes of a plate primary particle according to an embodiment.

Referring to FIG. 11A, embodiments of the plate primary particle may have a polygonal nanoplate shape such as a hexagon as in A, a nanodisk shape as in B, and a cuboid shape as in C.

Referring to FIG. 11A, the thickness t of the plate particle is smaller than the lengths a and b in the longitudinal direction. The longitudinal length a may be greater than or equal to b. The direction in which the thickness t is defined in the plate particle, is defined as the thickness direction, and the direction containing the lengths a and b is defined as the length direction.

The term "radial" used herein refers to embodiments where the thickness direction t ((001) direction) of the plate is aligned to be (substantially) perpendicular to the direction R facing the center of a secondary particle, as shown in FIG. 11B.

The average length of the primary plate particles may be about 150 nm to about 500 nm, for example, about 200 nm to about 380 nm, or about 290 nm to about 360 nm. The average length of the primary plate particles refers to the average length of the average major axis length and the average minor axis length in the longitudinal direction of the plate particles. The average thickness of the plate primary particles may be about 100 nm to about 200 nm, for example, about 120 nm to about 180 nm, or about 130 nm to about 150 nm. The ratio of the average thickness to the average length may be 1:2 to 1:5, for example 1:2.1 to 1:5, or 1:2.2 to 1:2.4.

In contrast, a single crystal may be a one body particle or a monolith particle, each having crystallinity. The one body particle herein refers to a structure in which particles do not aggregate with each other in terms of morphology and exist in an independent phase.

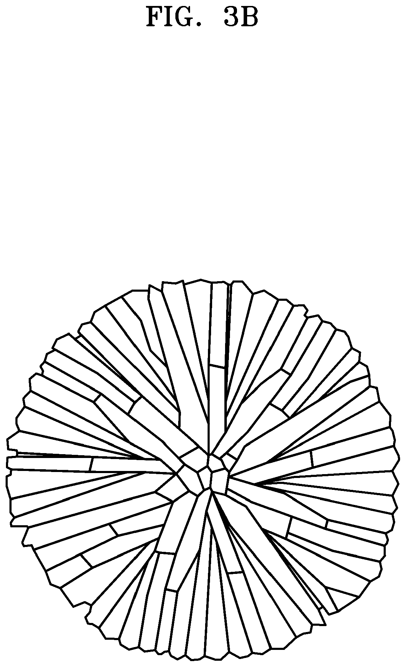

According to an embodiment, polycrystals have an uneven surface compared to a single crystal (e.g., single crystal shown in FIG. 3B) if the surface thereof is examined through a scanning electron microscope. According to another embodiment, polycrystals can be confirmed more reliably through particle cross-sectional analysis, and the crystal form can be confirmed through transmission electron microscopy (TEM) analysis. As such, polycrystals can be identified by particle shape and/or particle cross-section observation through a scanning electron microscope or transmission electron microscope.

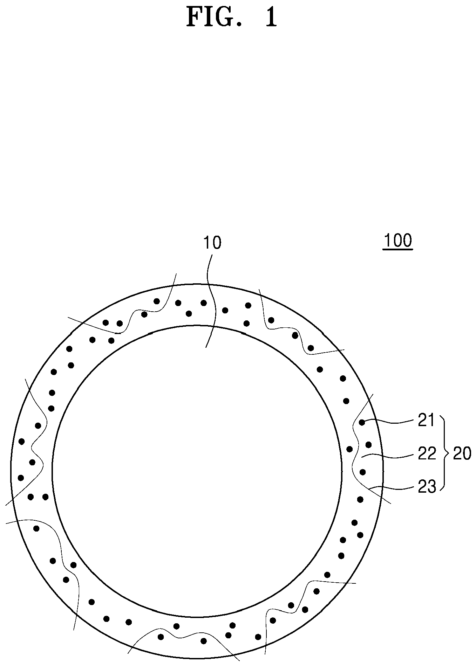

Referring to FIG. 1, a composite cathode active material 100 includes a core 10 and a shell 20 continuously or discontinuously formed over the surface of the core 10. In this regard, the core 10 represents a $1^{st}$ core including a first lithium transition metal oxide and/or a $2^{nd}$ core including a second lithium transition metal oxide, and will be described as one core for convenience.

Each of the first lithium transition metal oxide and the second lithium transition metal oxide may include a secondary particle including a plurality of primary particles. The first lithium transition metal oxide may be a large-diameter lithium transition metal oxide having a particle diameter which is greater than that of the second lithium transition metal oxide, and

the second lithium transition metal oxide may be a small-diameter lithium transition metal oxide having a particle diameter which is smaller than that of the first lithium transition metal oxide.

The first lithium transition metal oxide and the second lithium transition metal oxide have a bimodal particle size distribution in a particle size distribution, and the particle diameter ratio of the first lithium transition metal oxide and the second lithium transition metal oxide may be 2.5:1 to 40:1.

The particle diameter ratio of the first lithium transition metal oxide and the second lithium transition metal oxide may be, for example, 2.5:1 to 40:1, 2.9:1 to 40:1, 3:1 to 40:1, 3:1 to 30:1, 3:1 to 20:1, 3:1 to 10:1, or 3:1 to 5:1. If the first lithium transition metal oxide and the second lithium transition metal oxide have these ranges of particle diameter ratios, energy density and cycle characteristics of a lithium battery including a composite cathode active material can be further improved.

The particle diameter of the first lithium transition metal oxide may be, for example, 3 μm to 15 μm, 3 μm to 12 μm, 3 μm to 10 μm, 5 μm to 10 μm, 7 μm to 10 μm, 8 μm to 10 μm, or 9 μm to 10 μm. The particle diameter of the first lithium transition metal oxide may be, for example, a median particle diameter (D50). The particle diameter of the second lithium transition metal oxide may be, for example, at least about 1 μm and less than about 7 μm, about 1 μm to about 7 μm, about 1 μm to about 6 μm, about 1 μm to about 5 μm, or about 1 μm to about 4 μm (e.g. about 2 μm to less than about 7 μm, about 2 μm to about 7 μm, about 2 μm to about 6 μm, about 2 μm to about 5 μm, or about 2 μm to about 4 μm; or about 2 μm to less than about 7 μm, about 2 μm to about 7 μm, about 2 μm to about 6 μm, about 2 μm to about 5 μm, or about 2 μm to about 4 μm). The particle diameter of the second lithium transition metal oxide may be, for example, a median particle diameter (D50). If the first lithium transition metal oxide and the second lithium transition metal oxide have these ranges of average particle diameter, energy density and/or cycle characteristics of a lithium battery including a composite cathode active material may be further improved. The particle diameters of the first lithium transition metal oxide and the second lithium transition metal oxide may be measured using, for example, a laser diffraction method and/or a dynamic light scattering method. The particle diameter is the value of the median particle diameter (D50) if 50% of the cumulative volume is reached starting from the smallest particle size, and it can be measured, for example, using a laser scattering particle size analyzer (such as Horiba LA-920) and converting the data to volume.

The weight ratio of the first lithium transition metal oxide and the second lithium transition metal oxide may be, for example, 92:8 to 60:40, 90:10 to 60:40, 85:15 to 65:35, 80:20 to 65:35, or 75:25 to 65:35. If the first lithium transition metal oxide and the second lithium transition metal oxide have these ranges of weight ratios, the energy density and/or cycle characteristics of a lithium battery including a composite cathode active material may be further improved.

The shell in the composite cathode active material may be only on the 1st core, or only on the 2nd core, or on both the 1st core and the 2nd core.

The shell in the composite cathode active material may be on, for example, the 1st core. For example, the shell may be on the 1st core and may not be on the 2nd core. For example, the shell may be on the first lithium transition metal oxide, which is a large-diameter lithium transition metal oxide, and may not be on the second lithium transition metal oxide, which is a small-diameter lithium transition metal oxide. A 1st core/shell structure may be obtained by providing the shell on the 1st core. By providing the shell on the surface of the large-diameter lithium transition metal oxide, the specific surface area of the large-diameter composite cathode active material is reduced, the side reaction between the large-diameter lithium transition metal oxide and an electrolyte is reduced, and the electronic conductivity (e.g., electrical conductivity) of the large-diameter lithium transition metal oxide may be improved. As a result, the energy density and/or cycle characteristics of the lithium battery may be further improved.

The shell in the composite cathode active material may be on, for example, the 2nd core. For example, the shell may be on the 2nd core and may not be on the 1st core. For example, the shell may be on the second lithium transition metal oxide, which is a small-diameter lithium transition metal oxide, and may not be on the first lithium transition metal oxide, which is a large-diameter lithium transition metal oxide. A 2nd core/shell structure may be obtained by providing the shell on the 2nd core. Because the shell is on the surface of the small-diameter lithium transition metal oxide, side reactions between the small-diameter composite cathode active material and the electrolyte may be reduced, and the electronic conductivity (e.g., electrical conductivity) of the small-diameter composite cathode active material may be improved. As a result, the energy density and/or cycle characteristics of the lithium battery may be further improved.

In a composite cathode active material, for example, a shell may be both on the 1st core and on the 2nd core. For example, the shell may be on the 1st core and concurrently (e.g., simultaneously) on the 2nd core. For example, the shell may be on the first lithium transition metal oxide, which is a large-diameter lithium transition metal oxide, and may be on the second lithium transition metal oxide, which is a small-diameter lithium transition metal oxide. A 1st core/shell structure may be obtained by providing the shell on the 1st core, and a 2nd core/shell structure may be obtained by providing the shell on the 2nd core. Because the composite cathode active material includes the 1st core/shell structure and the 2nd core/shell structure, the energy density and/or cycle characteristics of the lithium battery may be further improved.

The amount of the shell may be no more than 5 wt% (e.g., less than or equal to 5 wt%), for example, about 0.01 wt% to about 5 wt% (e.g. about 0.05 wt% to about 3 wt%, about 0.1 wt% to about 2 wt%, about 0.2 wt% to about 1 wt%, about 0.2 wt% to about 0.5 wt%, about 0.2 wt% to about 0.4 wt%, or about 0.2 wt% to about 0.3 wt%), based on the total weight of the composite cathode active material.

The shell 20 may cover all or a part of the core 10. The core 10 includes a lithium transition metal oxide, and the shell 20 includes a first metal oxide 21, a first carbon-based material 22, and a second carbon-based material 23. The second carbon-based material 23 includes fibrous carbon having an aspect ratio of at least 10. If the composite cathode active material 100 is prepared, a composite including a plurality of first metal oxides 21 arranged in the matrix of the first carbon-based material 22 may be used to provide the shell 20 on the core 10 including lithium transition metal oxide. Accordingly, the shell 20 may be uniformly on the core 10 while preventing or reducing aggregation of the first carbon-based material 22. The shell 20 on the core 10 may effectively block or reduce contact between the core 10 and an electrolyte. By effectively blocking or reducing the contact between the core 10 and the electrolyte by the shell 20, side reactions caused by the contact between the core 10 and the electrolyte may be prevented or reduced. In some embodiments, by providing the shell 20 on the core 10, cation mixing due to contact between the core 10 and the electrolyte may be suppressed or reduced. By suppressing or reducing cation mixing caused by contact between the core 10 and the electrolyte, the formation of a resistance layer on the inside and/or surface of the composite cathode active material 100 may be suppressed or reduced. In some embodiments, because the shell 20 is on the core 10, the elution of transition metal ions from the lithium transition metal oxide core 10 may be suppressed or reduced. The first carbon-based material may be, for example, a crystalline carbon-based material. The first carbon-based material may be, for example, a carbon-based nanostructure. The first carbon-based material may be, for example, a carbon-based two-dimensional nanostructure. The first carbon-based material may be, for example, graphene. In some embodiments, the shell including graphene and/or the matrix thereof has flexibility, allowing for easy accommodation of volume changes of the composite cathode active material during charging and discharging, thereby preventing or reducing the occurrence of cracks inside the composite cathode active material. Because graphene has high electronic conductivity, interface resistance between the composite cathode active material and the electrolyte may be reduced. Accordingly, despite the introduction of a graphene-including shell, the internal resistance of the lithium battery is maintained or reduced. Other carbon-based materials are difficult to uniformly coat on lithium transition metal oxide cores due to easy agglomeration.

The shell includes a second carbon-based material that is fibrous carbon having an aspect ratio of 10 or greater. Accordingly, a conducting path of the composite cathode active material may be further increased. The second carbon-based material may form a three-dimensional conductive network among a plurality of composite cathode active materials to reduce internal resistance of a cathode including the composite cathode active material. By fixing the fibrous carbon on the composite cathode active material, a uniform and stable three-dimensional conductive network can be formed among the plurality of composite cathode active materials. Therefore, due to the inclusion of the second carbon-based material in the composite cathode active material, high-rate characteristics of a lithium battery having a composite cathode active material can be improved. In a simple mixture of a lithium transition metal oxide core and fibrous carbon, which is a second carbon-based material, it is difficult to form a uniform three-dimensional conductive network among a plurality of lithium transition metal oxide particles due to aggregation of fibrous carbon. As illustrated in FIG. 1, a second carbon-based material 23 may be on the surface of the composite cathode active material 100. Also, as shown in FIG. 1, the second carbon-based material 23 may protrude from the surface of the composite cathode active material 100. Therefore, the second carbon-based material 23 may effectively provide a conductive network among the plurality of composite cathode active materials 100. The second carbon-based material 23 may be easily coated onto the core 10 by being included within the matrix of the first carbon-based material 22. The matrix of the first carbon-based material 22 may act as a binder for binding the core 10 and the second carbon-based material 23. Therefore, in the absence of the matrix of the first carbon-based material 22, it is difficult for the second carbon-based material 23 to be easily attached on the core 10 or the second carbon-based material 23 may be easily detached from the core 10 during the preparation of the slurry for the cathode. If a different binder is added to bind the core 10 with the second carbon-based material 23, internal resistance of the composite cathode active material 100 may be increased as the core 10 is covered with an insulating binder. In some embodiments of high-temperature heat treatment of the core coated with the second carbon-based material and the binder in order to carbonize the binder, the core 10 and the second carbon-based material 23 may be deteriorated during the heat treatment process.

The aspect ratio of the second carbon-based material may be at least 10, or at least 20. The aspect ratio of the second carbon-based material may be, for example, about 10 to about 100,000, about 10 to about 80,000, about 10 to about 50,000, about 10 to about 10,000, about 10 to about 5000, about 10 to about 1000, about 10 to about 500, about 10 to about 100, or about 10 to about 50. The aspect ratio of the second carbon-based material is, for example, a ratio of the length of the major axis passing through the center of the second carbon-based material to the length of the minor axis that is perpendicular to the major axis, wherein the length of the major axis is the length of the second carbon-based material and the length of the minor axis is a diameter of the second carbon-based material.

The diameter (e.g. average diameter) of the second carbon-based material may be, for example, not more than 50 nm, not more than 30 nm, not more than 20 nm, or not more than 10 nm. The diameter (e.g. average diameter) of the second carbon-based material may be, for example, about 1 nm to about 50 nm, about 1 nm to about 30 nm, or about 1 nm to about 10 nm. If the diameter of the second carbon-based material is too large, the absolute number of strands per volume may decrease, and thus the effect of reducing internal resistance may be insignificant. If the diameter of the second carbon-based material is too small, uniform dispersion may be difficult.

The length (e.g. average length) of the second carbon-based material may be, for example, not more than 1000 $\mu$m, not more than 100 $\mu$m, not more than 50 $\mu$m, not more than 10 $\mu$m, not more than 5 $\mu$m, not more than 2 $\mu$m, not more than 1 $\mu$m, not more than 500 nm, or not more than 300 nm. The length (e.g. average length) of the second carbon-based material may be, for example, about 100 nm to about 1000 $\mu$m, about 100 nm to about 500 $\mu$m, about 100 nm to about 100 $\mu$m, about 100 nm to about 50 $\mu$m, about 100 nm to about 10 $\mu$m, about 100 nm to about 5 $\mu$m, about 100 nm to about 2 $\mu$m, about 100 nm to about 1 $\mu$m, about 100 nm to about 500 nm, or about 100 nm to about 300 nm. The length (e.g. average length) of the second carbon-based material may be, for example, about 500 nm to about 1000 $\mu$m, about 500 nm to about 500 $\mu$m, about 500 nm to about 100 $\mu$m, about 500 nm to about 50 $\mu$m, about 500 nm to about 10 $\mu$m, about 500 nm to about 5 $\mu$m, or about 500 nm to about 2 $\mu$m. As the length of the second carbon-based material is increased, the internal resistance of the electrode may be decreased. If the length of the second carbon-based material is too short, it may be difficult to provide an effective conductive path.

The second carbon-based material may include, for example, carbon nanofibers, carbon nanotubes, or a combination thereof.

The carbon nanotubes may include, for example, a carbon nanotube primary structure, a carbon nanotube secondary structure formed by aggregating a plurality of carbon nanotube primary particles, or a combination thereof.

The carbon nanotube primary structure is one carbon nanotube unit. In the carbon nanotube unit, a graphite sheet may have a cylindrical shape (e.g., a substantially cylindrical shape) having a nano-sized diameter and has a sp2 bonding structure. Depending on the angle and structure at which the graphite surface is bent, the characteristics of a conductor or a semiconductor may be displayed. Carbon nanotube units can be classified into single-walled carbon nanotubes (SWCNT), double-walled carbon nanotubes (DWCNT), triple-walled carbon nanotubes (TWCNT), and multi-walled carbon nanotubes (MWCNT), depending on the number of walls that make up the structure. The smaller the wall thickness of the carbon nanotube unit, the lower the resistance.

The primary structure of carbon nanotubes may include, for example, single-walled carbon nanotubes (SWCNT), double-walled carbon nanotubes (DWCNT), triple-walled carbon nanotubes (TWCNT), multi-walled carbon nanotubes (MWCNT), or a combination thereof. The diameter (e.g. average diameter) of the primary structure of carbon nanotubes may be, for example, greater than or equal to 1 nm or greater than or equal to 2 nm. The diameter (e.g. average diameter) of the primary structure of carbon nanotubes may be, for example, not more than 20 nm or not more than 10 nm. The diameter (e.g. average diameter) of the primary structure of carbon nanotubes may be, for example, about 1 nm to about 20 nm, about 1 nm to about 15 nm, or about 1 nm to about 10 nm. The length of the primary structure of carbon nanotubes may be, for example, greater than or equal to 100 nm or greater than or equal to 200 nm. The length (e.g. average length) of the primary structure of carbon nanotubes may be, for example, not more than 2 $\mu$m, not more than 1 $\mu$m, not more than 500 nm, or not more than 300 nm. The length (e.g. average length) of the primary structure of carbon nanotubes may be, for example, about 100 nm to about 2 $\mu$m, about 100 nm to about 1 $\mu$m, about 100 nm to about 500 nm, about 100 nm to about 400 nm, about 100 nm to about 300 nm, or about 200 nm to about 300 nm. The diameter and/or length (e.g. average diameter and/or average length) of the primary structure of carbon nanotubes may be measured by scanning electron microscopy (SEM) and/or transmission electron microscopy (TEM) images. In some embodiments, the diameter and/or length (e.g. average diameter and/or average length) of the primary structure of carbon nanotubes may be measured by laser diffraction.

The secondary structure of carbon nanotubes is a structure in which the primary structure of carbon nanotubes is assembled to form a bundle-type or rope-type structure, either partially or completely. The secondary structure of carbon nanotubes may include, for example, bundle-type carbon nanotubes, rope-type carbon nanotubes, or a combination thereof. The diameter (e.g. average diameter) of the secondary structure of carbon nanotubes may be, for example, greater than or equal to 2 nm or greater than or equal to 3 nm. The diameter (e.g. average diameter) of the secondary structure of carbon nanotubes may be, for example, not more than 50 nm, not more than 30 nm, not more than 20 nm, or not more than 10 nm. The diameter (e.g. average diameter) of the secondary structure of carbon nanotubes may be, for example, about 2 nm to about 50 nm, about 2 nm to about 30 nm, or about 2 nm to about 20 nm. The length (e.g. average length) of the carbon nanotube secondary structure may be, for example, greater than or equal to 500 nm, greater than or equal to 700 nm, greater than or equal to 1 $\mu$m, or greater than or equal to 10 $\mu$m. The length (e.g. average length) of the secondary structure of carbon nanotubes may be, for example, not more than 1000 $\mu$m, not more than 500 $\mu$m, or not more than 100 $\mu$m. The length (e.g. average length) of the secondary structure of carbon nanotubes may be, for example, about 500 nm to about 1000 $\mu$m, about 500 nm to about 500 $\mu$m, about 500 nm to about 200 $\mu$m, about 500 nm to about 100 $\mu$m, or about 500 nm to about 50 $\mu$m. The diameter and/or length (e.g. average diameter and/or average length) of the secondary structure of carbon nanotubes may be measured by scanning electron microscopy

(SEM) images and/or optical microscopy. In some embodiments, the diameter and/or length (e.g. average diameter and/or average length) of the secondary structure of carbon nanotubes may be measured by laser diffraction.

The secondary structure of carbon nanotubes may be used for the preparation of the composite cathode active material, after being dispersed in a solvent and converted into the primary structure of carbon nanotubes.

The amount of the second carbon-based material may be, for example about 0.1 wt% to about 75 wt%, about 0.1 wt% to about 50 wt%, about 1 wt% to about 40 wt%, or about 5 wt% to about 30 wt%, based on the total weight of the first carbon-based material and the second carbon-based material. The inclusion of the first carbon-based material and the second carbon-based material in the composite cathode active material provides a more effective conduction path within the composite cathode active material, which can result in a further reduction in the internal resistance of the composite cathode active material. As a result, cycle characteristics of a lithium battery including a composite cathode active material may be further improved. The amount of the second carbon-based material may be 5 wt% or less or 1 wt% or less, and the amount of the second carbon-based material may be, for example, about 0.001 wt% to about 5 wt%, about 0.01 wt% to about 3 wt%, about 0.01 wt% to about 1 wt%, about 0.01 wt% to about 0.5 wt%, or about 0.01 wt% to about 0.1 wt% (e.g. about 0.02 wt% to about 0.05 wt%, or about 0.025 wt% to about 0.04 wt%), based on the total weight of the composite cathode active material. Due to the inclusion of the second carbon-based material in the composite cathode active material, a conduction path is provided or ensured within the composite cathode active material, which may result in a further reduction in the internal resistance of the composite cathode active material. As a result, cycle characteristics of a lithium battery including a composite cathode active material may be further improved.

The shell also contains the first metal oxide and the first carbon-based material. The first carbon-based material is derived from, for example, a graphene matrix, the first carbon-based material has a relatively low density and high porosity compared to other carbon-based materials derived from graphite-based materials. The d002 interplanar distance of the first carbon-based material may be, for example, greater than or equal to 3.38 Å, greater than or equal to 3.40 Å, greater than or equal to 3.45 Å, greater than or equal to 3.50 Å, greater than or equal to 3.60 Å, greater than or equal to 3.80 Å, or greater than or equal to 4.00 Å. The d002 interplanar distance of the first carbon-based material included in the shell may be, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. In some embodiments, the d002 interplanar distance of other carbon-based materials derived from graphite-based materials may be, for example, not more than 3.38 Å, or from about 3.35 Å to about 3.38 Å. In some embodiments, because the first metal oxide has the voltage resistance, deterioration of the lithium transition metal oxide included in the core can be prevented or reduced during charging and discharging at a high voltage. The shell may include, for example, one type of first metal oxide or two or more types of different first metal oxides. As a result, high-temperature cycle characteristics of the lithium battery including the composite cathode active material are improved. The amount of the shell may be, for example, about 0.1 wt% to about 5 wt%, about 0.1 wt% to about 4 wt%, about 0.1 wt% to about 3 wt%, about 0.1 wt% to about 2.5 wt%, about 0.1 wt% to about 2 wt%, or about 0.1 wt% to about 1.5 wt% (e.g. about 0.2 wt% to about 1 wt%, about 0.2 wt% to about 0.5 wt%, about 0.2 wt% to about 0.4 wt%, or about 0.2 wt% to about 0.3 wt%), based on the total weight of the composite cathode active material. The amount of the first metal oxide may be, for example, about 0.06 wt% to about 3 wt%, about 0.06 wt% to about 2.4 wt%, about 0.06 wt% to about 1.8 wt%, about 0.06 wt% to about 1.5 wt%, about 0.06 wt% to about 1.2 wt%, about or 0.06 wt% to about 0.9 wt%, based on the total weight of the composite cathode active material. Because the composite cathode active material includes such ranges of the shell and the first metal oxide, the cycle characteristics of the lithium battery may be further improved.

The first metal oxide may include a first metal, which may include, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2). Because the first metal oxide is placed in the matrix of the first carbon-based material, uniformity of the shell placed on the core is improved, and voltage resistance of the composite cathode active material may be further improved. For example, the shell may include $Al_2O_x$ (0<x<3) as the first metal oxide.

The shell may further include at least one type of a second metal oxide represented by $M_aO_c$ (0<a≤3 and 0<c≤4 where if a is 1, 2, or 3, c is an integer). M is at least one metal selected from Group 2 to Group 13, Group 15, and Group 16 of the Periodic Table of the Elements (e.g. at least one metal selected from Group 13). For example, the second metal oxide includes the same metal as the first metal oxide, and the ratio c/a of c to a in the second metal oxide may be greater than the ratio b/a of b to a in the first metal oxide. For example, c/a > b/a. The second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide is, for example, a reduction product of the second metal oxide. The first metal oxide is obtained by reducing some or all of the second metal oxide. Therefore, the first metal oxide has a lower amount of oxygen and a lower metal oxidation number than the second metal oxide. The shell may include, for example, $Al_2O_x$ (0<x<3) as the first metal oxide and $Al_2O_3$ as the second metal oxide.

The shell may include, for example, the first carbon-based material, and the core may include, for example, a lithium transition metal oxide. The first carbon-based material and the transition metal of lithium transition metal oxide may be, for example, chemically bound through chemical bonding. The carbon atom (C) of the first carbon-based material included in the shell and the transition metal (Me) of the lithium transition metal oxide may be chemically bound through a C-O-Me bond (for example, a C-O-Ni bond) via an oxygen atom. The first carbon-based material in the shell and the lithium transition metal oxide in the core are chemically bonded through chemical bonding to form a composite of the core and the shell. Thus, the composite cathode active material is distinguished from a simple physical mixture of the first carbon-based material and the lithium transition metal oxide. The lithium transition metal oxide and the first carbon-based material may be chemically bound to each other by chemical bond. In this regard, the chemical bond may be, for example, a covalent bond or an ionic bond.

The shell includes, for example, one or more selected from among the first metal oxide and the second metal oxide, and the particle diameter of one or more selected from the first metal oxide and the second metal oxide may be, for example, about 1 nm to about 100 nm, about 1 nm to about 50 nm, about 1 nm to about 30 nm, about 5 nm to about 30 nm, or about 10 nm to about 30 nm. Within these nanometer ranges of particle diameters of the first metal oxide and/or the second metal oxide, a uniform distribution may be obtained in the matrix of the first carbon-based material. If the particle diameter of at least one selected from the first metal oxide and the second metal oxide excessively increases, the internal resistance of the composite cathode electrode active material may be increased due to the increase in the thickness of the shell. If the particle diameter of at least one selected from the first metal oxide and the second metal oxide is excessively reduced, uniform dispersion may not be obtained.

The shell may include the first metal oxide and/or the second metal oxide, and may include the first carbon-based material. The first carbon-based material may be provided in a direction protruding from the surface of the first metal oxide and/or the second metal oxide. The first carbon-based material may be provided in a direction protruding from the surface of the first metal oxide and/or second metal oxide by directly growing from the surface of the first metal oxide and/or the second metal oxide. The first carbon-based material provided in a direction protruding from the surface of the first metal oxide and/or the second metal oxide may be, for example, a carbon-based two-dimensional nanostructure, a carbon-based flake, and/or graphene.

The thickness of the shell may be, for example, 1 nm to about 5 μm, about 1 nm to about 1 μm, about 1 nm

to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, or about 1 nm to about 20 nm. Because the shell has these ranges of thickness, the electronic conductivity (e.g., electrical conductivity) of the cathode including the composite cathode active material may be further improved.

The composite cathode active material may further include, for example, a third metal doped on the core and/or a third metal oxide coated on the core. The shell may be on the third metal doped on the core and/or the third metal oxide coated on the core. For example, after the third metal is doped on the surface of the lithium transition metal oxide core and/or the third metal oxide is coated on the surface of the lithium transition metal oxide, the shell may be on the third metal and/or the third metal oxide. For example, the composite cathode active material may include: a core; an interlayer on the core; and a shell on the interlayer, wherein the interlayer may include a third metal and/or a third metal oxide. The third metal may be at least one metal selected from Al, Zr, W, and Co, and the third metal oxide may be $Al_2O_3$, $Li_2O$-$ZrO_2$, $WO_2$, $CoO$, $Co_2O_3$, $Co_3O_4$, or a combination thereof.

The shell over the surface of the core may include at least one selected from: a composite including a first metal oxide, and a first carbon-based material, for example, graphene; and/or a product obtained by milling the composite. The first metal oxide may be placed in a matrix of the first carbon-based material, for example, a graphene matrix. The shell may be prepared from a composite containing, for example, a first metal oxide, and a first carbon-based material, for example, graphene. The composite may further include a second metal oxide in addition to the first metal oxide. The composite may include, for example, two or more first metal oxides. The composite may include, for example, two or more first metal oxides and two or more second metal oxides.

The amount of at least one selected from the composite and the product obtained by milling the same may be, for example, not more than 5 wt%, not more than 3 wt%, not more than 2 wt%, or not more than 2.5 wt%, or not more than 1.5 wt% based on the total weight of the composite cathode active material. The amount of at least one selected from the composite and the product obtained by milling the same may be about 0.01 wt% to about 5 wt%, about 0.01 wt% to about 4 wt%, about 0.01 wt% to about 3 wt%, about 0.01 wt% to about 2.5 wt%, about 0.01 wt% to about 2 wt%, or about 0.01 wt% to about 1.5 wt%, based on the total weight of the composite cathode active material. Because the composite cathode active material includes these amount ranges of the composite and the product obtained by milling the same, cycle characteristics of a lithium battery including the composite cathode active material may be further improved.

The composite may include at least one selected from the first metal oxide and the second metal oxide. The particle diameter (e.g. average particle diameter, such as D50) of at least one selected from the first metal oxide and the second metal oxide may be about 1 nm to about 100 nm, about 1 nm to about 50 nm, about 1 nm to about 30 nm, about 5 nm to about 30 nm, or about 10 nm to about 30 nm. Within these nanometer ranges of the particle diameters of the first metal oxide and/or the second metal oxide, the uniform distribution may be obtained in the matrix of the first carbon-based material of the composite. Therefore, this composite can be uniformly coated on the core without agglomeration to form a shell. Further, the first metal oxide and/or the second metal oxide may be more evenly on the core because the first metal oxide and/or the second metal oxide has a particle diameter within this nanometer range. Therefore, the first metal oxide and/or the second metal oxide may be uniformly on the core, thereby more effectively exhibiting voltage resistance characteristics. The particle diameters (e.g. average particle diameter, such as D50) of the first metal oxide and/or the second metal oxide may be measured by using, for example, a laser diffraction method and/or a measuring device using a dynamic light scattering method. The particle diameter is the value of the median particle diameter (D50) if 50% of the cumulative volume is reached starting from the smallest particle size, and it can be measured, for example, using a laser scattering particle size analyzer (such as Horiba LA-920) and converting the data to volume. A deviation of uniformity of at least one selected from the first metal oxide and/or the second metal oxide may be not more than 3%, not more than 2%, or not more than 1%. Uniformity may be determined by, for example, X-ray photoelectron spectroscopy (XPS). Therefore, at least one selected from the first metal oxide and the second metal oxide may be uniformly distributed in the composite, while having a deviation of uniformity of not more than 3%, not more than 2%, or not more than 1%.

The composite includes a first carbon-based material. The first carbon-based material may have, for example, a branched structure, and at least one metal oxide selected from the first metal oxide and the second metal oxide may be distributed in the branched structure of the first carbon-based material. The branched structure of the first carbon-based material may include, for example, a plurality of first carbon-based material particles in contact with each other. Because the first carbon-based material may have a branched structure, various suitable conductive paths may be provided. The first carbon-based material may be, for example, graphene. Graphene may have, for example, a branched structure, and at least one metal oxide selected from the first metal oxide and the second metal oxide may be distributed in the branched structure of graphene. The branched structure of graphene may include, for example, a plurality of graphene particles in contact with each other. Because graphene may have a branched structure, various suitable conductive paths may be provided.

The first carbon-based material may have, for example, a spherical structure (e.g., a generally spherical structure), and at least one metal oxide selected from the first metal oxide and the second metal oxide may be distributed in the spherical structure. The size of the spherical structure of the first carbon-based material may be about 50 nm to about 300 nm. The number of first carbon-based materials having a spherical structure may be two or more. Because the first carbon-based material may have a spherical structure, the composite may have a rigid structure. The first carbon-based material may be, for example, graphene. Graphene may have, for example, a spherical structure, and at least one metal oxide selected from the first metal oxide and the second metal oxide may be distributed in the spherical structure. The size of the spherical structure of graphene may be about 50 nm to about 300 nm. There may be a plurality of graphene having a spherical structure. Because graphene may have a spherical structure, the composite may have a rigid structure.

The first carbon-based material may have, for example, a spiral structure (e.g., a substantially spiral structure) in which a plurality of spherical structures are connected, and at least one metal oxide selected from the first metal oxide and the second metal oxide may be distributed in the spherical structure of the spiral structure. The size of the spiral structure of the first carbon-based material may be about 500 nm to about 100 $\mu$m. Because the first carbon-based material may have a spiral structure, the composite may have a solid structure. The first carbon-based material may be, for example, graphene. Graphene may have, for example, a spiral structure in which a plurality of spherical structures are connected, and at least one metal oxide selected from the first metal oxide and the second metal oxide may be distributed in the spherical structure of the spiral structure. The size of the spiral structure of graphene may be about 500 nm to about 100 $\mu$m. As graphene may have a spiral structure, the composite may have a solid structure.

The first carbon-based material may have, for example, a cluster structure in which a plurality of spherical structures are aggregated, and at least one metal oxide selected from the first metal oxide and the second metal oxide may be distributed in the spherical structures of the cluster structure. The size of the cluster structure of the first carbon-based material may be about 0.5 mm to about 10 cm. Because the first carbon-based material may have a cluster structure, the composite may have a solid structure. The first carbon-based material may be, for example, graphene. Graphene may have, for example, a cluster structure in which a plurality of spherical structures are aggregated, and at least one metal oxide selected from the first metal oxide and the second metal oxide may be distributed in the spherical structures of the cluster structure. The size of the cluster structure of graphene may be about 0.5 mm to about 10 cm. As graphene may have a cluster structure, the composite may have a solid structure.

The composite may be, for example, a crumpled faceted-ball structure, and at least one selected from the first metal oxide and the second metal oxide may be distributed inside or on the surface of the structure. Because the composite may have such a faceted-ball structure, the composite may be easily coated on the irregular surface of the core.

The composite may be, for example, a planar structure, and at least one selected from the first metal oxide and the second metal oxide may be distributed inside or on the surface of the structure. Because the composite has such a two-dimensional planar structure, the composite may be easily coated on the irregular surface of the core.

The first carbon-based material extends up to a distance of not more than 10 nm from the first metal oxide and may contain at least 1 to 20 carbon-based material layers. For example, a first carbon-based material having a total thickness of not more than 12 nm may be on the first metal oxide by stacking a plurality of first carbon-based material layers. For example, the total thickness of the first carbon-based material may be about 0.6 nm to about 12 nm. The first carbon-based material may be, for example, graphene. Graphene extends up to a distance of not more than 10 nm from the first metal oxide and may contain at least 1 to 20 graphene layers. For example, graphene having a total thickness of not more than 12 nm may be on the first metal oxide by stacking a plurality of graphene layers. For example, the total thickness of graphene may be about 0.6 nm to about 12 nm.

The composite cathode active material includes a core, and the core may include, for example, a lithium transition metal oxide (e.g., the first lithium transition metal oxide and the second lithium transition metal oxide) represented by one selected from Formulae 1 to 8:

Formula 1 $\qquad$ $Li_aNi_xMn_yM'_zO_{2-b}A_b$

wherein, in Formula 1,

$1.0 \leq a \leq 1.2$, $0 \leq b \leq 0.2$, $0 < x \leq 0.85$, $0.1 \leq y < 0.3$, $0 < z \leq 0.1$, and $x+y+z=1$,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B) or a combination thereof,
A may be F, S, Cl, Br, or a combination thereof,

Formula 2   $LiNi_xCo_yMn_zO_2$,

Formula 3   $LiNi_xCo_yAl_zO_2$,

wherein, in Formulae 2 and 3, $0.8 \leq x \leq 0.95$, $0 \leq y \leq 0.2$, $0 < z \leq 0.2$ and $x+y+z=1$.

Formula 4   $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$.

The lithium transition metal oxides of Formulae 1 to 4 may have a high nickel content of at least 80 mol%, at least 85 mol%, at least 90 mol%, or at least 95 mol%, based on the total transition metal mole number, while providing excellent initial capacity, room temperature life characteristics, and high temperature life characteristics. For example, the nickel content in the lithium transition metal oxides of Formulae 1 to 4 may be about 80 mol% to about 99 mol%, about 85 mol% to about 99 mol%, or about 90 mol% to about 97 mol%, based on the total transition metal mole number.

Formula 5   $Li_aCo_xM_yO_{2-b}A_b$

wherein, in Formula 5,

$1.0 \leq a \leq 1.2$, $0 \leq b \leq 0.2$, $0.9 \leq x \leq 1$, $0 \leq y \leq 0.1$, and $x+y=1$, and
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B) or a combination thereof, and A may be F, S, Cl, Br or a combination thereof.

Formula 6   $Li_aNi_xCo_yM_zO_{2-b}A_b$

wherein, in Formula 6,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A may be F, S, Cl, Br, or a combination thereof.

Formula 7   $Li_aM1_xM2_yPO_{4-b}X_b$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,
M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y) or a combination thereof, and X may be O, F, S, P or a combination thereof.

Formula 8   $Li_aM3_zPO_4$

wherein, in Formula 8, $0.90 \leq a \leq 1.1$, $0.9 \leq z \leq 1.1$, and
M3 may be chromium (Cr), manganese (Mn), iron (Fe), cobalt (Co), nickel (Ni), copper (Cu), zirconium (Zr), or a combination thereof.

A material used for both the first lithium transition metal oxide and the second lithium transition metal oxide may be the same.

In the composite cathode active material according to an embodiment, bimodal polycrystalline large-diameter and polycrystalline small-diameter particles are used as a core material, and a shell formed on the surface of at least one of the core materials includes a composite and a fibrous carbon.

The composite in the shell is capable of CNT anchoring by $\pi$-$\pi$ bond with fibrous carbon such as carbon nanotubes (CNT). Because GB and CNT coatings are prepared in a dry process, separation of CNTs as in wet coating is suppressed or reduced, and CNTs are not separated from the composite cathode active material even in the process of preparing the electrode slurry thereafter.

The amount of fibrous carbon, which is the second carbon-based material in the shell, may be 1 wt% or less based on the total weight of the composite cathode active material. If within such a range, the electrode slurry exhibits excellent workability without an increase in viscosity.

A cathode according to another embodiment includes the composite cathode active material. In embodiments where the cathode includes the composite cathode active material, improved energy density, improved cycle characteristics, and increased conductivity (e.g., electrical conductivity) may be obtained.

Because the shell of the composite cathode active material includes the second carbon-based material, the composite cathode active material may additionally act as a conductive material (e.g., an electrically conductive material). Therefore, the amount of conductive material used in the cathode may be reduced. The conductive material is useful to improve the conductivity (e.g., electrical conductivity) of a battery. However, if the amount of conductive material is increased, the mixture density of the cathode is decreased, resulting in a decrease in the energy density of the lithium battery. In embodiments of the cathode of the present disclosure, due to the use of the composite cathode active material, the amount of the conductive material may be reduced without an increase in the internal resistance. Accordingly, because the mixture density of the cathode is increased, the energy density of the lithium battery may be improved. For example, in high-capacity lithium batteries, the energy density of lithium batteries may be significantly increased by increasing the amount of the composite cathode active material while decreasing the amount of conductive materials (e.g., electrically conductive materials).

If the shell of the composite cathode active material consists solely of second carbon-based materials, the exfoliation of the second carbon-based materials may occur during the preparation of the slurry containing the second carbon-based materials. This may result in an increase in the viscosity of the electrode slurry and a deterioration in the quality of the electrode plate, potentially making it impractical or unsuitable for use.

However, in the composite cathode active material according to an embodiment, the shell includes at least one first metal oxide, a first carbon-based material, and a second carbon-based material, so that such a coating layer may be formed as a composite, in which the first metal oxide is placed in the matrix of the first carbon-based material, stably attaches the second carbon-based material on the surface of the cathode active material, making it difficult for the second carbon-based material to be separated.

The cathode may be prepared by, for example, a wet method. The cathode may be manufactured by, for example, the following example method, but the method is not necessarily limited thereto and may be adjusted according to required or desired conditions.

First, a cathode active material composition is prepared by mixing together the composite cathode active material, a conductive material (e.g., an electrically conductive material), a binder, and a solvent. The prepared cathode active material composition is directly coated on an aluminium current collector and dried to prepare a cathode electrode plate having a cathode active material layer formed thereon. In some embodiments, the cathode active material composition is cast on a separate support, and then a film obtained by peeling from the support is laminated on the aluminium current collector to prepare a cathode plate having a cathode active material layer formed thereon.

Examples of the conductive material include Denka black, carbon black, graphite particles, natural graphite, artificial graphite, acetylene black, Ketjen black, carbon fiber; carbon nanotubes; metal powders, metal fibers or metal tubes of copper, nickel, aluminium, and/or silver; conductive polymers such as polyphenylene derivatives, but are not limited thereto. The conductive material may be any suitable conductive material that is generally used in the art. In some embodiments, the cathode may not contain a separate conductive material (e.g., a separate electrically conductive material).

The binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. The solvent may be N-methylpyrrolidone (NMP), acetone, water, etc. However, the binder and the solvent are not limited thereto, and may be any suitable binder and/or solvent that is generally used in the art.

A plasticizer and/or a pore forming agent may be added to the cathode active material composition to form pores in an electrode plate.

The amounts of the composite cathode active material, the conductive material, the binder, and the solvent used in the cathode may be any suitable levels generally used in the art in lithium batteries. Depending on the use and configuration of the lithium battery, one or more of the conductive material, the binder, and the solvent may be omitted.

The amount of the binder used in the cathode may be about 0.1 wt% to about 10 wt% or about 0.1 wt% to about 5 wt% of the total weight of the cathode active material layer. The amount of the composite cathode active material used in the cathode may be about 80 wt% to about 99 wt%, about 90 wt% to about 99 wt%, or about 95 wt% to about 99 wt% of the total weight of the cathode active material layer. The amount of the conductive material used in the cathode may be about 0.01 wt% to about 10 wt%, about 0.01 wt% to about 5 wt%, about 0.01 wt% to about 3 wt%, about 0.01 wt% to about 1 wt%, about 0.01 wt% to about 0.5 wt%, or about 0.01 wt% to about 0.1 wt%, based on the total weight of the cathode active material layer. The conductive material may be omitted.

In some embodiments, the cathode may additionally include other general cathode active materials in addition to the composite cathode active material.

The general cathode active materials may be any suitable lithium-containing metal oxide that is generally used in the art. For example, the lithium-containing metal oxide may be one or more types of composite oxides of lithium and a metal selected from cobalt, manganese, nickel, and a combination thereof, and may be a compound represented by one selected from the following formulae: $Li_aA_{1-b}B'_bD_2$ (where $0.90 \leq a \leq 1$, and $0 \leq b \leq 0.5$); $Li_aE_{1-b}B'_bO_{2-c}D_c$ (where $0.90 \leq a \leq 1$, $0 \leq b \leq 0.5$, and $0 \leq c \leq 0.05$); $LiE_{2-b}B'_bO_{4-c}D_c$ (where $0 \leq b \leq 0.5$, and $0 \leq c \leq 0.05$); $Li_aNi_{1-b-c}Co_bB'_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}'_\alpha$ (where $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1$, $0 \leq b \leq 0.5$, $0 \leq c \leq 0.05$, and $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3(0 \leq f \leq 2)$; $Li_{(3-f)}Fe_2(PO_4)_3(0 \leq f \leq 2)$; and $LiFePO_4$.

In the Formulae representing these compounds, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. A compound in which a coating layer is provided on the surface of these compounds may be used, and a mixture of these compounds and the compound provided with the coating layer may also be used. The coating layer provided on the surface of these compound may include a coating element compound such as an oxide of the coating element, a hydroxide of the coating element, an oxyhydroxide of the coating element, an oxycarbonate of the coating element, or a hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, and/or the like. A detailed description of the coating method not necessary here because it may be well understood by those in the art.

In some embodiments, the cathode may be a dry cathode prepared by a dry method.

A dry cathode includes a dry composite cathode active material, a dry conductive material (e.g., a dry electrically conductive material) and a dry binder, wherein the dry composite cathode active material includes a core including: a lithium transition metal oxide; and a shell over the surface of the core, wherein the shell includes: one or more first metal oxides represented by Formula $M_aO_b$ ($0<a\leq3$ and $0<b<4$ where if a is 1, 2, or 3, b is not an integer); a first carbon-based material; and a second carbon-based material, wherein the first metal oxide is included in the matrix of the first carbon-based material, and M is at least one metal selected from Group 2 to Group 13, Group 15, and Group 16 of the Periodic Table of the Elements (e.g. at least one metal selected from Group 13), wherein the second carbon-based material is fibrous carbon having an aspect ratio of at least 10.

A method of preparing a dry cathode includes, for example, preparing a dry mixture by dry mixing together a dry composite cathode active material, a dry conductive material, and a dry binder, providing a cathode current collector, providing an interlayer on one surface of the cathode current collector, and providing the dry mixture on the interlayer and rolling to prepare a cathode in which a cathode active material layer is on one surface of the cathode current collector.

First, the composite cathode active material, a dry conductive agent (e.g., a dry electrically conductive material), and a dry binder are dry-mixed together to prepare a dry mixture. Dry mixing refers to mixing while a processing solvent is not included. The processing solvent may be, for example, solvents used in the preparation of electrode slurries. The processing solvent may be, for example, water, NMP, etc., but is not limited thereto, and any suitable processing solvent that is generally used in the art in the preparation of an electrode slurry, may be used herein. Dry mixing may be performed at a temperature of for example 25 °C to 65 °C using an agitator. Dry mixing may be performed using a stirrer at a rotation speed of, for example, about 10 rpm to about 10000 rpm, or about 100 rpm to about 10000 rpm. Dry mixing may be performed using a stirrer, for example, for about 1 minute to about 200 minutes, or about 1 minute to about 150 minutes. The composite cathode electrode active material may be a dry composite cathode active material.

Dry mixing may be performed, for example, at least one time. First, a first mixture may be prepared by primary dry mixing together a composite cathode active material, a dry conductive material (e.g., a dry electrically conductive material), and a dry binder. The primary dry mixing may be performed, for example, at a temperature of 25 °C to 65 °C, at a rotation speed of not more than 2000 rpm, for not more than 15 minutes. The primary dry mixing may be performed for about 5 minutes to about 15 minutes at a rotational speed of about 500 rpm to about 2000 rpm at a temperature of, for example, about 25 °C to about 65 °C. The composite cathode active material, the dry conductive material, and the dry binder may be uniformly mixed together by the primary dry mixing. Subsequently, a second mixture may be prepared by secondary dry mixing together the composite cathode active material, the dry conductive material, and the dry binder. The secondary dry mixing may be performed, for example, at a temperature of about 25 °C to about 65 °C, at a rotation speed of at least 4000 rpm, and for at least 10 minutes. Secondary dry mixing may be performed for about 10 minutes to about 60 minutes at a rotational speed of about 4000 rpm to about 9000 rpm at a temperature of, for example, about 25 °C to about 65 °C. A dry mixture including a fibrillated dry binder may be obtained by secondary dry mixing.

The stirrer may be, for example, a kneader. The stirrer may include: for example, a chamber; one or more rotating shafts which are inside the chamber and rotate; and a blade rotatably coupled to the rotation shafts and provided in the longitudinal direction of the rotation shafts. The blade may be, for example, one or more selected from a ribbon blade, a sigma blade, a jet (Z) blade, a dispersion blade, and a screw blade. By including the blade, a dough-like mixture can be prepared by effectively mixing together the dry composite cathode active material, the dry conductive material, and the dry binder, even without a solvent.

The prepared dry mixture may be put into an extrusion device and extruded into a sheet form. The pressure at the time of extrusion may be, for example, about 4 MPa to about 100 MPa, or about 10 MPa to about 90 MPa. The obtained extruded product in the form of a sheet may be a sheet for the cathode active material layer.

As the dry conductive material, Denka black, carbon black, graphite fine particles, natural graphite, artificial graphite, acetylene black, Ketjen black, carbon fiber; carbon nanotubes; metal powder, metal fiber and/or metal tube of, for example, copper, nickel, aluminium, and/or silver; and/or conductive polymers such as polyphenylene derivatives may be used, but the disclosure is not limited thereto. Any suitable conductive material may be used as long as it is generally used in the art. The conductive material may be, for example, a carbon-based conductive material. A dry conductive material is a conductive material (e.g., an electrically conductive material) that has not come into contact with a process solvent.

The dry binder may be a vinylidene fluoride/hexafluoropropylene copolymer, polyvinylidene fluoride, polyacrylonitrile, polymethyl methacrylate, polytetrafluoroethylene (PTFE), a mixture of these polymers, a styrene butadiene rubber-based polymer, etc. However, the binder is not limited thereto, and may be any suitable binder that is generally used in the art. The dry binder may be, for example, polytetrafluoroethylene (PTFE). A dry binder is a binder that has not been contacted with a process solvent.

A plasticizer and/or a pore forming agent may be added to the dry mixture to form pores in a cathode active material layer.

The amounts of the dry composite cathode active material, the dry conductive material, and the dry binder used for the dry cathode may be in the same ranges as the amounts of the composite cathode active material, the conductive material, and the binder used for the wet cathode, respectively.

Next, a cathode current collector is provided.

The cathode current collector may be, for example, a plate and/or foil made indium (In), copper (Cu), magnesium (Mg), stainless steel, titanium (Ti), iron (Fe), cobalt (Co), nickel (Ni), zinc (Zn), aluminium (Al), germanium (Ge), lithium (Li) and/or an alloy thereof. A cathode current collector may be, for example, aluminium foil.

The cathode current collector may be omitted. The thickness of the cathode current collector may be, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector may include, for example, a base film and a metal layer on one or opposite sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. Because the base film contains thermoplastic polymers, the base film may liquefy in the event of a short circuit, inhibiting or reducing the rapid increase in current. The base film may be an insulator (e.g., an electrical insulator), for example. The metal layer may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or alloys thereof. The cathode current collector may additionally include a metal chip and/or a lead tab. For details of the base film, the metal layer, the metal chip, and the lead-tab of the cathode current collector, the description provided below with respect to an anode current collector may be referred to. With such a structure of the cathode collector, the weight of the electrode may be reduced, consequently enhancing the energy density.

Next, an interlayer is placed on at least one side of the cathode current collector. The interlayer may include a carbon-based conductive material and a binder. The interlayer may be omitted.

Next, a sheet for the cathode active material layer is placed on the interlayer and pressed to prepare the cathode having the cathode active material layer on one side of the cathode current collector. An interlayer is placed between the cathode current collector and the cathode active material layer. The pressing may be, for example, a roll press, a flat press, and/or the like, but is not necessarily limited thereto. The pressure during pressing may be, for example, about 0.1 ton/cm$^2$ to about 10.0 ton/cm$^2$, but is not limited to this range. If the pressure during pressing is excessively increased, cracks may occur in the cathode current collector. If the pressure during pressing is too low, the bonding strength between the cathode current collector and the cathode active material layer may deteriorate.

A lithium battery according to another embodiment employs a cathode including the composite cathode active material.

If a lithium battery uses the cathode including the composite cathode active material, improved energy density, cycle characteristics, and thermal stability may be obtained.

The lithium battery may be manufactured by the following example method, but the disclosure is not necessarily limited to this method and the method may be adjusted according to required or desired conditions.

First, a cathode may be prepared according to the method of manufacturing the cathode.

Next, the anode may be prepared as follows. For example, the anode may be manufactured in substantially the same way as the cathode, except that an anode active material is used instead of the composite cathode active material. In some embodiments, the anode active material composition may include substantially the same conductive agent, binder, and solvent which are used in the cathode.

For example, an anode active material, a conductive material (e.g., an electrically conductive material), a binder, and a solvent are mixed together to prepare an anode active material, which is then directly coated on an anode current collector to prepare an anode plate. In some embodiments, the prepared anode active material composition is cast on a separate support and an anode active material film peeled off from the support is laminated on a copper current collector to manufacture an anode plate.

The anode active material may be any suitable anode active material that is generally used in the art as an anode active material for a lithium battery. For example, at least one selected from the group consisting of lithium metal, a metal alloyable with lithium, a transition metal oxide, a non-transition metal oxide, and a carbon-based material, may be included in the anode active material. Examples of the lithium-alloyable metal include Si, Sn, Al, Ge, Pb, Bi, Sb, an Si-Y alloy (Y is an alkali metal, an alkali-earth metal, a Group 13 element, a Group 14 element, a transition metal, a rare earth element, or a combination thereof, not Si), and an Sn-Y alloy (Y is an alkali metal, an alkali-earth metal, a Group 13 element, a Group 14 element, a transition metal, a rare earth element, or a combination thereof, not Sn). The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof). The transition metal oxide may be, for example, lithium titanium oxide, vanadium oxide, lithium vanadium oxide, and/or the like. Non-transition metal oxides may be, for example, $SnO_2$, $SiO_x$ (0<x<2), and/or the like. The carbon-based material may be, for example, crystalline carbon, amorphous carbon, or a mixture thereof. Crystalline carbon may be, for example, graphite, such as natural and/or artificial graphite in an amorphous form, a platy form, a flake form, a spherical form, and/or a fibrous form. Amorphous carbon may be, for example, soft carbon (low-temperature calcined carbon) and/or hard carbon, mesophase pitch carbide, calcined coke, and/or the like.

The amounts of the anode active material, the conductive material, the binder, and the solvent may be any suitable levels that are generally used in the art in lithium batteries. Depending on the use and configuration of the lithium battery, one or more of the conductive material, the binder, and the solvent may be omitted.

The amount of the binder used in the anode may be about 0.1 wt% to about 10 wt% or about 0.1 wt% to about 5 wt% of the total weight of the anode active material layer. The amount of the conductive material used in the anode may be about 0.1 wt% to about 10 wt% or about 0.1 wt% to about 5 wt% of the total weight of the anode active material layer. The amount of the anode active material used in the anode may be, for example, about 80 wt% to about 99 wt%, about 90 wt% to about 99 wt% or about 95 wt% to about 99 wt% of the total weight of the anode active material layer. If the anode active material is lithium metal, the anode may not include a binder and a conductive material.

The anode current collector may include or consist of, for example, a material that does not react with lithium, for example, does not form an alloy or a compound with lithium. The materials that constitute the anode collector may include, for example, copper (Cu), stainless steel, titanium (Ti), iron (Fe), cobalt (Co), and/or nickel (Ni), but are not limited to these. Any suitable material that is generally used as an electrode collector in the art may be used. The anode current collector may include one of the metals, and/or an alloy and/or coating material of two or more metals. The anode current collector may be, for example, in the form of a plate or foil.

The anode current collector may include, for example, a base film and a metal layer on one or opposite sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. Because the base film contains thermoplastic polymers, the base film may liquefy in the event of a short circuit, inhibiting or reducing the rapid increase in current. The base film may be an insulator (e.g., an electrical insulator), for example. The metal layer may include, for example, copper (Cu), stainless steel, titanium (Ti), iron (Fe), cobalt (Co), nickel (Ni), and/or an alloy thereof. The metal layer acts as an electrochemical fuse and is cut in the event of an overcurrent to perform a short circuit prevention or reduction function. The limit current and the maximum current may be controlled by adjusting the thickness of the metal layer. The metal layer may be plated and/or deposited on the base film. If the thickness of the metal layer is decreased, the limit current and/or the maximum current of the anode current collector is decreased, and thus stability of the lithium battery during a short circuit may be improved. A lead tab may be added on the metal layer for external connection. The lead tab may be welded to the metal layer and/or the metal layer/base film stack by ultrasonic welding, laser welding, spot welding, and/or the like. The metal layer may be electrically connected to the lead tab while melting the base film and/or the metal layer during welding. To make welding between the metal layer and the lead tab more robust, a metal chip may be added between the metal layer and the lead tab. A metal chip may be a thin piece of the same material as the metal in the metal layer. The metal chip may be, for example, metal foil and/or metal mesh. The metal chip may be, for example, aluminium foil, copper foil, and/or a SUS foil. By welding the lead tab after providing the metal chip on the metal layer, the lead tab may be welded to the metal chip/metal layer stack or the metal chip/metal layer/base film stack. During welding, the metal layer or the metal layer/metal chip stack may melt so that the metal layer, and/or the metal chip stack may be electrically connected to the lead tab. A metal chip and/or lead tab may be added to a portion on the metal layer. The thickness of the base film may be, for example, about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If the base film has these ranges of thickness, the weight of the electrode assembly may be more effectively reduced. The melting point of the base film may be, for example, about 100 °C to about 300 °C, about 100 °C to about 250 °C, or about 100 °C to about 200 °C. Because the base film has these ranges of melting point, the base film may be melted and easily coupled to the lead tab in the process of welding the lead tab. Surface treatment such as corona treatment may be performed on the base film in order to improve adhesion between the base film and the metal layer. The thickness of the metal layer may be, for example, about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If the metal layer has these ranges of thickness, the stability of the electrode assembly may be provided or guaranteed while maintaining conductivity (e.g., electrical conductivity). The thickness of the metal chip may be, for example, about 2 $\mu$m to about 10 $\mu$m, about 2 $\mu$m to about 7 $\mu$m, or about 4 $\mu$m to about 6 $\mu$m. If the metal chip has these ranges of thicknesses, connection between the metal layer and the lead tab may be more easily performed. With such a structure of the anode collector, the weight of the electrode may be reduced, consequently enhancing the energy density.

Next, a separator to be inserted between the cathode and the anode is prepared.

As for the separator, any suitable one that is generally used in the art in a lithium battery can be used. As the separator, for example, any suitable separator that has low resistance to ion migration of the electrolyte and excellent ability to absorb the electrolyte, may be used. The separator may be a non-woven fabric and/or a woven fabric including at least one selected from fiberglass, polyester, Teflon, polyethylene, polypropylene, polytetrafluoroethylene (PTFE), and a combination thereof. For lithium-ion batteries, separators that can be wound, such as polyethylene and/or polypropylene, are used, and for lithium-ion polymer batteries, separators with excellent organic electrolyte-solution wetting ability may be used.

The separator may be manufactured by the following example method, but the disclosure is not necessarily limited to this method and may be adjusted according to required or desired conditions.

First, a separator composition is prepared by mixing together a polymer resin, a filler, and a solvent. The separator composition is directly coated and dried on the electrode to form a separator. In some embodiments, after a separator composition is cast and dried on a support, a separator film peeled off from the support is laminated on the electrode to form a separator.

The polymer used to manufacture the separator is not particularly limited, and any suitable polymer generally used in the art for the binder of an electrode plate may be used. For example, a vinylidene fluoride/hexafluoropropylene copolymer, polyvinylidene fluoride (PVDF), polyacrylonitrile, polymethyl methacrylate, or mixtures thereof may be used.

Next, an electrolyte is prepared.

The electrolyte may be, for example, an organic electrolyte solution. In an embodiment, the organic electrolyte solution may be prepared by dissolving a lithium salt in an organic solvent.

Any suitable organic solvent that can be used as an organic solvent in the art, may be used as the organic solvent herein. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

Any suitable lithium salt may be used as long as it is used as a lithium salt in the art. Lithium salts may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (provided that x and y are each 1 to 20), LiCl, LiI, or mixtures thereof.

In some embodiments, the electrolyte may be a solid electrolyte. The solid electrolyte may be, for example, boron oxide, lithium oxynitride, etc., but is not limited thereto, and any suitable solid electrolyte generally used in the art can be used herein. The solid electrolyte may be formed on the anode by a method such as sputtering, and/or a separate solid electrolyte sheet may be laminated on the anode.

The solid electrolyte may be, for example, an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be selected from $Li_{1+x+y}Al_xTi_{2-x}Si_yP_{3-y}O_{12}$ (0<x<2 and 0≤y<3), $BaTiO_3$, $Pb(Zr,Ti)O_3(PZT)$, $Pb_{1-x}La_xZr_{1-y}Ti_yO_3(PLZT)$(0≤x<1, 0≤y<1), $Pb(Mg_3Nb_{2/3})O_3-PbTiO_3(PMN-PT)$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$(0<x<2, 0<y<3), $Li_xAl_yTi_z(PO_4)_3$ (0<x<2, 0<y<1, and 0<z<3), $Li_{1-x,y}(Al, Ga)_x(Ti, Ge)_{2-x}Si_yP_{3-y}O_{12}$(0≤x≤1 and 0≤y≤1), $Li_xLa_yTiO_3$ (0<x<2 and 0<y<3), $Li_2O$, LiOH, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, and x may be an integer from 1 to 10). The solid electrolyte may be produced by a sintering method and/or the like. For example, the oxide-based solid electrolyte may be a garnet system selected from $Li_7La_3Zr_2O_{12}$ (LLZO) and $Li_{3+x}La_3Zr_{2-a}M_aO_{12}$ (M doped LLZO, M = Ga, W, Nb, Ta, or Al, and x is an integer from 1 to 10, 0<a<2).

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ and/or $P_2S_5$. Sulfide-based solid electrolyte particles have higher lithium ion conductivity than other inorganic compounds. For example, sulfide-based solid electrolytes may include $Li_2S$ and/or $P_2S_5$. If a sulfide solid electrolyte material constituting the sulfide-based solid electrolyte includes $Li_2S-P_2S_5$, the mixed molar ratio of $Li_2S$ to $P_2S_5$ may be, for example, in the range of about 50:50 to about 90:10. In some embodiments, an inorganic solid electrolyte prepared by adding $Li_3PO_4$, halogen, halogen compounds, $Li_{2+2x}Zn_{1-x}GeO_4$ ("LISICON", 0≤x<1), $Li_{3+y}PO_{4-x}N_x$ ("LIPON", 0<x<4, 0<y<3), $Li_{3.25}Ge_{0.25}P_{0.75}S_4$ ("ThioL-ISICON"), $Li_2O-Al_2O_3-TiO_2-P_2O_5$ ("LATP"), and/or the like to an inorganic solid electrolyte of $Li_2S-P_2S_5$, $SiS_2$, $GeS_2$, $B_2S_3$, or a combination thereof, may be used as a sulfide solid electrolyte material. Non-limiting examples of sulfide solid electrolyte materials include $Li_2S-P_2S_5$; $Li_2S-P_2S_5$-LiX (X= a halogen element); $Li_2S-P_2S_5-Li_2O$; $Li_2S-P_2S_5-Li_2O$-LiI; $Li_2S-SiS_2$; $Li_2S-SiS_2$-LiI; $Li_2S-SiS_2$-LiBr; $Li_2S-SiS_2$-LiCl; $Li_2S-SiS_2-B_2S_3$-LiI; $Li_2S-SiS_2-P_2S_5$-LiI; $Li_2S-B_2S_3$; $Li_2S$ -$P_2S_5-Z_mS_n$ (0<m<10, 0<n<10, Z=Ge, Zn or Ga); $Li_2S-GeS_2$; $Li_2S-SiS_2-Li_3PO_4$; and $Li_2S-SiS_2-Li_pMO_q$ (0<p<10, 0<q<10, M=P, Si, Ge, B, Al, Ga, or In). In this regard, the sulfide-based solid electrolyte material may be prepared by treating raw starting materials (for example, $Li_2S$, $P_2S_5$, etc.) of the sulfide-based solid electrolyte material by a melt quenching method, a mechanical milling method, and/or the like. Also, calcinations may be performed after the treatment. The sulfide-based solid electrolyte may be amorphous, crystalline, or a mixture thereof. The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include a liquid. The polymer solid electrolyte includes a polymer, and examples of the polymer include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ketone) (SPEEK), sulfonated poly(arylene ether ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the embodiment is not limited thereto, and any suitable polymer electrolytes generally available in the art may also be used. Any suitable lithium salts generally available in the art may also be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y are each independently from 1 to 20), LiCl, LiI, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more. The gel electrolyte may be, for example, a polymer gel electrolyte. For example, the gel electrolyte may have a gel state including a polymer. The polymer gel electrolyte may include, for example, a liquid electrolyte and a polymer, and/or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte used in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in the polymer solid electrolyte. The organic solvent may be selected from organic solvents used in liquid electrolytes. The lithium salt may be selected from lithium salts used in polymer solid electrolyte. The ionic liquid refers to a salt in a liquid state, and a molten salt at room temperature composed solely of ions and having a melting point below room temperature. The ionic liquid may include, for example, at least one compound including a) at least one cation selected from ammonium, pyrimidinium, pyridinium, imidazolium, piperidinium, pyrazolium, oxazolium, pyridazinium, phosphonium, sulfonium, triazole, and any mixture thereof, and b) at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

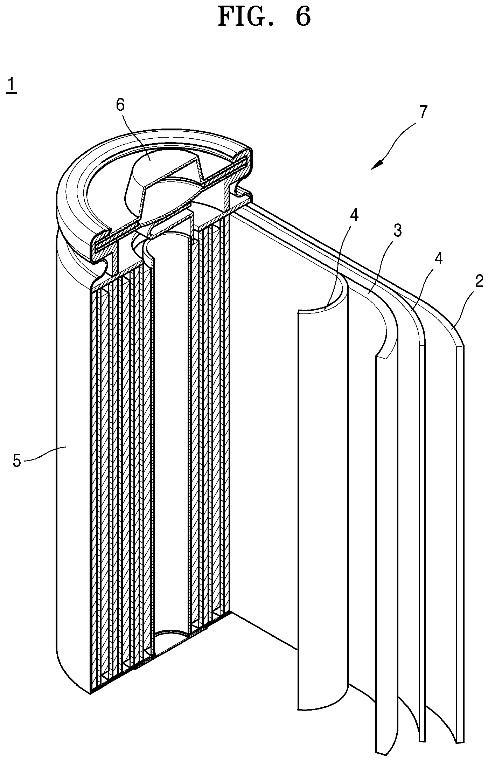

Referring to FIG. 6, a lithium battery 1 according to an embodiment includes a cathode 3, an anode 2, and a separator 4. The cathode 3, the anode 2, and the separator 4 may be wound or folded to form a battery structure 7. The battery structure 7 is accommodated in a battery case 5. An organic electrolyte is injected into the battery case 5 and sealed with a cap assembly 6 to complete the manufacture of the lithium battery 1. The battery case 5 may be cylindrical, but is not necessarily limited to such a shape and may have, for example, a prismatic shape, a thin film shape, or the like.

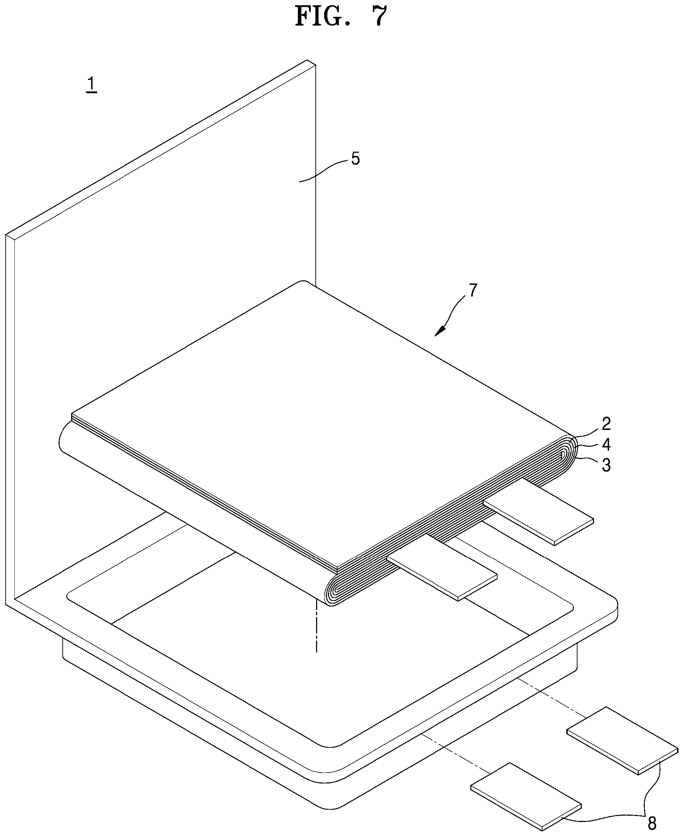

Referring to FIG. 7, a lithium battery 1 according to an embodiment includes a cathode 3, an anode 2, and a separator 4. The separator 4 may be between the cathode 3 and the anode 2, and the cathode 3, the anode 2, and the separator 4 may be wound or folded to form a battery structure 7. The battery structure 7 is accommodated in a battery case 5. An electrode tab 8 acting as an electrical path for inducing the current formed in the battery structure 7 to the outside may be included. An organic electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film shape, or the like.

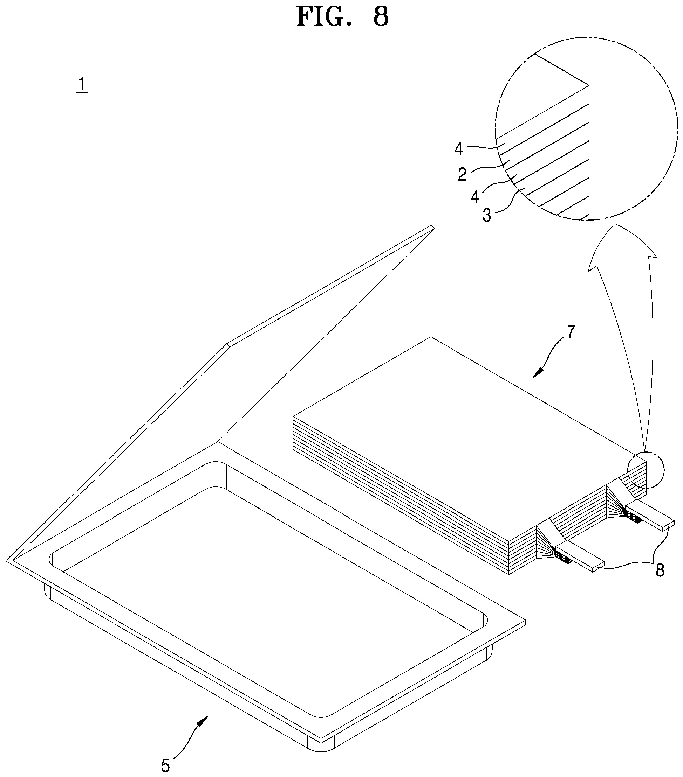

Referring to FIG. 8, a lithium battery 1 according to an embodiment includes a cathode 3, an anode 2, and a separator 4. The separator 4 is between the cathode 3 and the anode 2 to form a battery structure. The battery structure 7 is stacked in a bi-cell structure, and then accommodated in the battery case 5. An electrode tab 8 acting as an electrical path for inducing the current formed in the battery structure 7 to the outside may be included. An organic electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film shape, or the like.

The pouch-type lithium battery corresponds to those using a pouch as a battery case in the lithium batteries of FIGS. 6-8. A pouch type lithium battery may include one or more battery structures. A separator is between a cathode and an anode to form a cell structure. After the battery structure is stacked in a bi-cell structure, the resultant structure is wet by an organic electrolyte solution, and then, housed and sealed by a pouch, thereby completing the manufacture of a pouch-type lithium battery. For example, in some embodiments, the cathode, the anode, and the separator may be simply stacked and accommodated in the form of an electrode assembly in a pouch. In an embodiment, the cathode, the anode, and the separator may be wound or folded into an electrode assembly in the form of a jelly roll, and then, accommodated in the pouch. Then, an organic electrolyte is injected into the pouch, which was then sealed to complete the manufacture of the lithium battery.

Lithium batteries have excellent lifespan characteristics and high rate characteristics, so they are used, for example, in electric vehicles (EVs). For example, the lithium batteries are used for hybrid vehicles such as plug-in hybrid electric vehicles (PHEVs). The lithium batteries are also used in fields requiring or utilizing large amounts of power storage. For example, the lithium batteries are used for electric bicycles, power tools, etc.

A plurality of lithium batteries may be stacked to form a battery module, and a plurality of battery modules may form a battery pack. Such a battery pack may be used in any suitable device utilizing high capacity and high output. For example, the battery pack may be used for laptops, smartphones, electric vehicles, etc. The battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled by a battery management system. The battery management system may include a battery pack and a battery control device connected to the battery pack.

A method of preparing a composite cathode active material according to another embodiment includes providing a first lithium transition metal oxide; providing a second lithium transition metal oxide; providing a composite; providing a second carbon-based material; obtaining a 1st core/shell structure by mechanically milling together the first lithium transition metal oxide, the composite, and the second carbon-based material; obtaining a 2nd core/shell structure by mechanically milling together the second lithium transition metal oxide, the composite, and the second carbon-based material; and obtaining a composite cathode active material by mixing together the 1st core/shell structure and the 2nd core/shell structure.

The composite includes: at least one type of first metal oxide represented by Formula $M_aO_b$ (0<a≤3 and 0<b<4 where if a is 1, 2, or 3, b is not an integer); and a first carbon-based material, the first metal oxide is included within a matrix of the first carbon-based material, M is at least one metal selected from Group 2 to Group 13, Group 15, and Group 16 of the Periodic Table of the Elements (e.g. at least one metal selected from Group 13), and the second carbon-based material includes a fibrous carbon-based material having an aspect ratio of at least 10. The first lithium transition metal oxide and the second lithium transition metal oxide have different particle diameters.

The first lithium transition metal oxide and the second lithium transition metal oxide may be, for example, compounds represented by Formula 1 to 8. A material used for both the first lithium transition metal oxide and the second lithium transition metal oxide may be the same.

A composite is provided. The providing the composite may include, for example, providing a composite by supplying a reaction gas including or consisting of a carbon source gas to a structure including a second metal oxide and performing a heat treatment. The providing the composite may include, for example, providing a composite by supplying a reaction gas including or consisting of a carbon source gas to one or more second metal oxides represented by $M_aO_c$ (0 < a ≤ 3 and 0 < c ≤ 4 where if a is 1, 2, or 3, b is an integer) and performing a heat treatment, and M is at least one metal selected from Group 2 to Group 13, Group 15 and Group 16 of the Periodic Table of the Elements (e.g. at least one metal selected from Group 13). The second metal oxide may be subjected to a gradual heating process up to the heat treatment temperature (T). The heating time to the heat treatment temperature (T) may be about 10 minutes to about 4 hours. The heat treatment temperature (T) may be in the range of about 700 °C to about 1100 °C. Heat treatment may be performed at the heat treatment temperature (T) for the reaction time. The reaction time may be, for example, 4 hours to 8 hours. The heat-treated product may be cooled to room temperature to prepare a composite. The time spanning the process of cooling from the heat treatment temperature (T) to room temperature may be, for example, about 1 hour to about 5 hours.

The carbon source gas may be a gas including or consisting of a compound represented by Formula 9, or at least one gas mixture selected from a compound represented by Formula 9, a compound represented by Formula 10, and an oxygen-containing gas represented by Formula 11.

$$\text{Formula 9} \qquad C_nH_{(2n+2-a)}[OH]_a$$

wherein, in Formula 9, n is 1 to 20 and a is 0 or 1;

$$\text{Formula 10} \qquad C_nH_{2n}$$

wherein, in Formula 10, n is 2 to 6;

$$\text{Formula 11} \qquad C_xH_yO_z$$

wherein, in Formula 11, x is 0 or an integer from 1 to 20, y is 0 or an integer from 1 to 20, and z is 1 or 2.

The compound represented by Formula 9 and the compound represented by Formula 10 are at least one selected from methane, ethylene, propylene, methanol, ethanol, and propanol. The oxygen-containing gas represented by Formula 11 includes, for example, carbon dioxide ($CO_2$), carbon monoxide (CO), water vapor ($H_2O$), or a mixture thereof.

After the supplying a reaction gas including or consisting of a carbon source gas to the second metal oxide represented by $M_aO_c$ (0 < a ≤ 3 and 0 < c ≤ 4 where if a is 1, 2, or 3 and c is an integer) and heat treating the same, the resultant product may be further subjected to a cooling using one or more inert gases selected from nitrogen, helium, and argon. The cooling refers to adjusting to room temperature (20 °C to 25 °C). The carbon source gas may include one or more inert gases selected from nitrogen, helium, and argon.

In the composite preparing method, the process of growing a carbon-based material, for example, graphene, according to a gas phase reaction may be performed under various suitable conditions.

According to a first condition, for example, methane is supplied to a reactor where the second metal oxide represented by $M_aO_c$ (0 < a ≤ 3 and 0 < c ≤ 4 where if a is 1, 2, or 3, c is an integer) is placed, and then, is subjected to a gradual heating process up to the heat treatment temperature (T). The heating time to the heat treatment temperature (T) is about 10 minutes to about 4 hours, and the heat treatment temperature (T) is in the range of about 700 °C to about 1100 °C. Heat treatment is performed at the heat treatment temperature (T) for the reaction time. The reaction time may be, for example, 4 hours to 8 hours. The heat-treated product is cooled to room temperature to prepare a composite. The time spanning the process of cooling from the heat treatment temperature (T) to room temperature is, for example, about 1 hour to about 5 hours.

According to a second condition, for example, hydrogen is supplied to a reactor where the second metal oxide represented by $M_aO_c$ ($0 < a \leq 3$ and $0 < c \leq 4$ where if a is 1, 2, or 3, c is an integer) is placed, and then, is subjected to a gradual heating process up to the heat treatment temperature (T). The heating time to the heat treatment temperature (T) is about 10 minutes to about 4 hours, and the heat treatment temperature (T) is in the range of about 700 °C to about 1100 °C. After heat treatment at the heat treatment temperature T for a certain reaction time, methane gas is supplied and heat treatment is performed for the remaining reaction time. The reaction time may be, for example, 4 hours to 8 hours. The heat-treated product is cooled to room temperature to prepare a composite. Nitrogen is supplied during the cooling process. The time spanning the process of cooling from the heat treatment temperature (T) to room temperature is, for example, about 1 hour to about 5 hours.

According to a third condition, for example, hydrogen is supplied to a reactor where the second metal oxide represented by $M_aO_c$ ($0 < a \leq 3$ and $0 < c \leq 4$ where if a is 1, 2, or 3, c is an integer) is placed, and then, is subjected to a gradual heating process up to the heat treatment temperature (T). The heating time to the heat treatment temperature (T) is about 10 minutes to about 4 hours, and the heat treatment temperature (T) is in the range of about 700 °C to about 1100 °C. After heat treatment at the heat treatment temperature T for a certain reaction time, a gas mixture including methane and hydrogen is supplied and heat treatment is performed for the remaining reaction time. The reaction time may be, for example, 4 hours to 8 hours. The heat-treated product is cooled to room temperature to prepare a composite. Nitrogen is supplied during the cooling process. The time spanning the process of cooling from the heat treatment temperature (T) to room temperature is, for example, about 1 hour to about 5 hours.

In the process of preparing the composite, if the carbon source gas includes water vapor, a composite having excellent conductivity (e.g., electrical conductivity) may be obtained. The amount of water vapor in the gas mixture is not limited, and may be, for example, about 0.01 vol% to about 10 vol% based on 100 vol% of the total carbon source gas. The carbon source gas may be, for example, methane, a gas mixture containing methane and inert gas, or a gas mixture containing methane and an oxygen-containing gas.

The carbon source gas may be, for example, methane, a gas mixture containing methane and carbon dioxide, or a gas mixture containing methane, carbon dioxide and water vapor. The molar ratio of methane and carbon dioxide in the mixed gas of methane and carbon dioxide may be about 1:0.20 to 1:0.50, about 1:0.25 to 1:0.45, or about 1:0.30 to 1:0.40. The molar ratio of methane, carbon dioxide and water vapor in the mixed gas of methane, carbon dioxide and water vapor may be about 1:0.20 to about 0.50:0.01 to 1.45, about 1:0.25 to 0.45:0.10 to about 1.35, or about 1:0.30 to 0.40:about 0.50 to 1.0.

The carbon source gas may be, for example, carbon monoxide and/or carbon dioxide. The carbon source gas may be, for example, a mixed gas of methane and nitrogen. The molar ratio of methane and nitrogen in the mixed gas of methane and nitrogen may be about 1:0.20 to about 1:0.50, about 1:0.25 to about 1:0.45, or about 1:0.30 to about 1:0.40. The carbon source gas may not include an inert gas such as nitrogen.

The heat treatment pressure may be selected in consideration of the heat treatment temperature, the composition of the gas mixture, and the desired amount of carbon coating. The heat treatment pressure may be controlled by adjusting the amount of the gas mixture flowing in and the amount of the gas mixture flowing out. The heat treatment pressure may be, for example, at least 0.5 atm, at least 1 atm, at least 2 atm, at least 3 atm, at least 4 atm, or at least 5 atm. The heat treatment pressure may be, for example, about 0.5 atm to about 10 atm, about 1 atm to about 10 atm, about 2 atm to about 10 atm, about 3 atm to about 10 atm, about 4 atm to about 10 atm, or about 5 atm to about 10 atm.

The heat treatment time is not particularly limited and may be suitably or appropriately adjusted according to the heat treatment temperature, the heat treatment pressure, the composition of the gas mixture, and the desired carbon coating amount. For example, the reaction time at the heat treatment temperature may be, for example, 10 minutes to 100 hours, 30 minutes to 90 hours, or 50 minutes to 40 hours. For example, as the heat treatment time is increased, the amount of carbon deposited, for example, the amount of graphene (carbon) is increased, and thus the electrical properties of the composite may be improved. However, this tendency may not necessarily be directly proportional to time. For example, after a certain period of time, carbon deposition, for example, graphene deposition may no longer occur or the deposition rate may decrease.

Through the gas-phase reaction of the carbon source gas, even at relatively low temperatures, a composite may be obtained by providing a uniform coating of the first carbon-based material, for example, graphene, to one or more selected from the second metal oxide represented by $M_aO_c$ ($0 < a \leq 3$ and $0 < c \leq 4$ where if a is 1, 2, or 3 and c is an integer) and a reduction product thereof, for example, the first metal oxide represented by $M_aO_b$ ($0 < a \leq 3$ and $0 < b < 4$ where if is 1, 2, or 3, b is not an integer).

The composite may include at least one selected from: a matrix of a first carbon-based material, for example, a matrix of graphene, having at least one structure selected from a spherical structure, a spiral structure in which a plurality of spherical structures are connected, a cluster structure in which a plurality of spherical structures are aggregated, and a sponge structure; and at least one selected from a first metal oxide represented by $M_aO_b$ ($0 < a \leq 3$ and $0 < b < 4$ where if is 1, 2, or 3, b is not an integer) and included inside the matrix of graphene, and a second metal oxide represented by $M_aO_c$ ($0 < a \leq 3$ and $0 < c \leq 4$ where if a is 1, 2, or 3, c is an integer).

Next, the lithium transition metal oxide, the composite, and the second carbon-based material are mechanically milled.

In the mechanical milling, the milling method is not particularly limited, and any suitable method generally usable in the art that brings the lithium transition metal oxide and the composite into contact with the second carbon-based material using a machine, may be used herein.

At the time of milling, for example, a Novita mixer and/or the like may be used. The number of revolutions of the mixer during milling may be, for example, about 1000 rpm to about 5000 rpm or about 2000 rpm to about 4000 rpm. If the milling speed is too low, because the shear force applied to the lithium transition metal oxide and the composite and the second carbon-based material is weak, it may be difficult to form a chemical bond between the lithium transition metal oxide and the composite. If the milling speed is too high, it may be difficult to form a uniform and continuous shell by uniformly coating the composite and the second carbon-based material on the lithium transition metal oxide because the composite formation proceeds in an excessively short time. The milling time may be, for example, about 5 minutes to about 100 minutes, about 5 minutes to about 60 minutes, or about 5 minutes to about 30 minutes. If the milling time is too short, it may be difficult to form a uniform shell by uniformly coating the composite and the second carbon-based material on the lithium transition metal oxide. If the milling time is too long, production efficiency may be decreased. The amount of the composite may be not more than 5 wt%, not more than 4 wt%, not more than 3 wt%, not more than 2 wt%, or 1 wt% or less, based on the total weight of the lithium transition metal oxide and the composite. The amount of the composite may be, for example, about 0.01 wt% to about 5 wt%, about 0.01 wt% to about 4 wt%, about 0.01 wt% to about 3 wt%, about 0.1 wt% to about 2 wt%, or about 0.1 wt % to about 1 wt %, based on the total weight of the first lithium transition metal oxide and the composite. For example, based on 100 parts by weight of the mixture of the first lithium transition metal oxide and the composite, the amount of the composite may be about 0.01 parts by weight to about 5 parts by weight, about 0.01 parts by weight to about 4 parts by weight, about 0.01 parts by weight to about 3 parts by weight, about 0.1 parts by weight to about 3 parts by weight, about 0.1 parts by weight to about 2 parts by weight, or about 0.1 parts by weight to 1 part by weight. The median particle diameter (D50) of the composite used for mechanical milling of the first lithium transition metal oxide and the composite may be, for example, about 50 nm to about 200 nm, about 100 nm to about 300 nm, or about 200 nm to about 500 nm.

Embodiments of the subject matter of the present disclosure will be described in more detail through the following examples and comparative examples. However, the embodiments are provided herein for illustrative purpose only, and do not limit the scope of the present disclosure.

**Preparation of composite**

**Preparation Example 1: $Al_2O_3$@Gr composite**

$Al_2O_3$ particles (average particle diameter: about 20 nm) were placed in the reactor, and then, the temperature inside the reactor was raised to 1000 °C under the condition that $CH_4$ was supplied into the reactor at about 300 sccm at 1 atm for about 30 minutes.

Subsequently, heat treatment was performed by maintaining the temperature for 7 hours. The temperature inside the reactor was then adjusted to room temperature (20 °C to 25 °C) to obtain a composite in which $Al_2O_3$ particles and the reduction product thereof, $Al_2O_z$ ($0<z<3$) particles were embedded in graphene.

The amount of aluminium oxide ($Al_2O_3$ particles and the reduction product thereof, $Al_2O_z$ ($0<z<3$) particles) included in the composite was about 75 wt%.

**Preparation Example 2: $Al_2O_3$@Gr composite**

The composite was prepared in substantially the same manner as in Preparation Example 1, except that $Al_2O_3$ particles (average particle diameter: about 200 nm) were used instead of $Al_2O_3$ particles (average particle diameter: about 20 nm).

**Preparation Example 3: Preparation of polycrystalline large-diameter cathode active material $LiNi_{0.75}Mn_{0.22}Al_{0.03}O_2$ with an average particle diameter of 10 $\mu$m**

$NiSO_4$, aluminium sulfate ($CoSO_4 \cdot 7H_2O$), and $MnSO_4$ were each made into a 1.5 M aqueous solution, and the amounts of the aqueous solutions were adjusted to enable synthesis of a compound represented by $Ni_{0.75}Mn_{0.22}Al_{0.03}(OH)_2$, and the solutions were added to a co-precipitation reactor to synthesize a co-precipitate. At this time, an aqueous ammonia solution was added to form a complex compound, and in this case, to grow co-precipitates uniformly, the concentration of the aqueous ammonia solution and the amount of sodium hydroxide added were adjusted to control a pH. If the average particle diameter of co-precipitate was formed to be 10 $\mu$m, the reaction was stopped and co-precipitates were separated. Thereafter, heat treatment (drying) was performed in a vacuum oven at 120 °C for 10 hours to prepare a transition metal hydroxide precursor having a composition of $Ni_{0.75}Mn_{0.22}Al_{0.03}(OH)_2$.

The obtained precursor of transition metal hydroxide was mixed together with lithium compounds (lithium hydroxide and lithium carbonate mixed together in a molar ratio of 1.0:0.5) to achieve a Li/(Ni+Al+Mn) molar ratio of 1.01. The mixture was then subjected to heat treatment at a temperature of 850 °C for 20 hours in an oxidizing gas atmosphere containing 80 to 100 volume percent of oxygen to produce the cathode active material.

The prepared cathode active material had a polycrystalline structure with an average particle diameter of 10 $\mu$m, and the composition of the cathode active material was $LiNi_{0.75}Mn_{0.22}Al_{0.03}O_2$. The measurement provided herein is made based on the cross-section of secondary particles.

**Preparation Example 4: Preparation of $LiNi_{0.75}Mn_{0.22}Al_{0.03}O_2$ polycrystalline small-diameter cathode active material having an average particle diameter of 3.5 $\mu$m**

A cathode active material was prepared in substantially the same manner as in Preparation Example 3, except that if the average particle diameter of the co-precipitate was 3.5 $\mu$m during the preparation of the transition metal hydroxide precursor, the reaction was stopped and the co-precipitate was separated therefrom.

The fact that the cathode active materials of Preparation Examples 3 and 4 were polycrystalline was confirmed by identifying the particle shape and particle cross-section through a scanning electron microscope.

**Preparation Example 5: Preparation of single crystal large-diameter NMX ($LiNi_{0.75}Mn_{0.22}Al_{0.03}O_2$) having an average particle diameter of 10 $\mu$m**

A mixed solution was prepared by dissolving nickel sulfate ($NiSO_4 \cdot 6H_2O$), aluminium sulfate ($CoSO_4 \cdot 7H_2O$), and manganese sulfate ($MnSO_4 \cdot H_2O$) in distilled water, which was a solvent. For the formation of a complex compound, an ammonia water ($NH_4OH$) diluted solution and sodium hydroxide (NaOH) as a precipitant were used. Thereafter, the metal raw material mixture solution, ammonia water, and sodium hydroxide were each introduced into the reactor. Next, the reaction proceeds for about 20 hours while stirring. Thereafter, the slurry solution in the reactor was filtered, washed with high-purity distilled water, and dried for 24 hours to obtain $Ni_{0.75}Mn_{0.22}Al_{0.03}(OH)_2$ powder having an average particle diameter of 10 $\mu$m. This powder and LiOH were mixed together to satisfy the condition of Li/(Ni+Co+Mn) = 1.05, and put into a calcination furnace, and a second heat treatment was performed at 910 °C for 8 hours in an oxygen atmosphere to obtain cathode active material $LiNi_{0.75}Mn_{0.22}Al_{0.03}O_2$. Thereafter, the cathode active material was pulverized for about 30 minutes to separate/disperse into a plurality of cathode active materials having a single crystal structure. The average particle diameter of the obtained cathode active material having a single crystal structure was about 10.0 $\mu$m.

**Preparation Example 6: Preparation of single crystal small-diameter NMX having an average particle diameter of 3.5 $\mu$m**

A cathode active material was prepared in substantially the same manner as in Preparation Example 5, except that the reaction process was controlled to obtain $Ni_{0.75}Mn_{0.22}Al_{0.03}(OH)_2$ powder having an average particle diameter of 3.5 $\mu$m instead of $Ni_{0.75}Mn_{0.22}Al_{0.03}(OH)_2$ powder having an average particle diameter of 10 $\mu$m.

**Comparative Preparation Example 1: $SiO_2$@Gr composite**

$SiO_2$ particles (average particle diameter: about 15 nm) were placed in the reactor, and then, the temperature inside the reactor was raised to 1000 °C under the condition that $CH_4$ was supplied into the reactor at about 300 sccm at 1 atm for about 30 minutes.

Subsequently, heat treatment was performed by maintaining the temperature for 7 hours. The temperature inside the reactor was then adjusted to room temperature (20 °C to 25 °C) to obtain a composite in which $SiO_2$ particles and the reduction product thereof, $SiO_y$ (0<y<2) particles were embedded in graphene.

**Preparation of composite cathode active material**

**Example 1: Polycrystalline NMX large diameter + polycrystalline NMX small diameter + GB(Al$_2$O$_3$@Gr composite) 0.2 wt% + CNT 0.02 wt% coating composite cathode active material**

The polycrystalline large diameter LiNi$_{0.75}$Mn$_{0.22}$Al$_{0.03}$O$_2$ (referred to herein as large diameter NMX) having an average particle diameter of 10 $\mu$m obtained according to Preparation Example 3 and the composite prepared in Preparation Example 1, and CNT were milled for about 5 minutes to about 30 minutes at a rotational speed of about 1000 rpm to about 2000 rpm using a Nobilta Mixer (Hosokawa, Japan) to obtain a 1$^{st}$ core/shell structure. Large diameter NMX, the composite, and CNT were mixed together in a weight ratio of 100:0.2:0.02.

Polycrystalline large diameter NMX is a secondary particle having a structure in which a plurality of primary plate particles are radially arranged.

The long axes of a plurality of primary plate particles included in the large diameter NMX had a radially arranged structure. The average length of a plurality of primary plate particles in polycrystalline large diameter NMX refers to the average length of the average major axis length and the average minor axis length in the longitudinal direction of the plate particles. The average length of the primary plate particles was about 320 nm and the average thickness of the plate particles was about 140 nm.

The polycrystalline small diameter LiNi$_{0.75}$Mn$_{0.22}$Al$_{0.03}$O$_2$ (hereinafter referred to as small diameter NMX) with an average particle diameter of 3.5 $\mu$m obtained according to Preparation Example 4, the composite prepared in Preparation Example 1, and CNT were milled for about 5 minutes to about 30 minutes at a rotational speed of about 1000 rpm to about 2000 rpm using a Nobilta Mixer (Hosokawa, Japan) to obtain a 2$^{nd}$ core/shell structure. Small-diameter NMX, the composite, and CNT were mixed together at a weight ratio of 100:0.2:0.02.

Polycrystalline small diameter NMX is a secondary particle having a structure in which a plurality of primary plate particles are radially arranged. The long axes of a plurality of primary plate particles included in the small diameter NMX had a radially arranged structure. The average length of a plurality of primary plate particles in polycrystalline small diameter NMX refers to the average length of the average major axis length and the average minor axis length in the longitudinal direction of the plate particles. The average length of the primary plate particles was about 320 nm and the average thickness of the plate particles was about 140 nm.

A composite cathode active material was prepared by mixing together the 1$^{st}$ core/shell structure and the 2$^{nd}$ core/shell structure in a weight ratio of 92:8.

The polycrystalline large diameter and polycrystalline small diameter NMX used as starting materials in Example 1 showed structures as shown in FIG. 3A before being coated with the composite and CNT. FIG. 2 shows the image of the composite cathode active material after being coated. As a result of measuring the particle size distribution using a PSA, it was confirmed that it had a bimodal particle size distribution.

**Example 2: polycrystalline large diameter NMX + polycrystalline small diameter NMX + GB (Al$_2$O$_3$@Gr composite) 0.2 wt% + CNT 0.03 wt%**

A composite cathode active material was prepared in substantially the same manner as in Example 1, except that the mixing ratio of NMX, the composite, and carbon nanotubes was changed from 100:0.2:0.02 to 100:0.2:0.03.

As shown in FIG. 2, it was confirmed that the carbon nanotubes were on the surface of the composite cathode active material. The carbon nanotubes included a primary structure of carbon nanotubes and a secondary structure of carbon nanotubes formed by aggregation of a plurality of carbon nanotube units.

The primary structure of carbon nanotubes consists of a single carbon nanotube unit. The length of the carbon nanotube unit was 200 nm to 300 nm, and the diameter of the carbon nanotube was about 10 nm.

The secondary structure of carbon nanotubes was formed by aggregation of a plurality of carbon nanotube units. The length of the secondary structure of carbon nanotubes was more than 500 nm and the diameter was about 40 nm.

**Example 3: Polycrystalline large diameter NMX + polycrystalline small diameter NMX + GB (Al$_2$O$_3$@Gr composite) 0.2 wt% + CNT 0.05 wt%**

A composite cathode active material was prepared in substantially the same manner as in Example 1, except that the mixing ratio of NMX, the composite, and carbon nanotubes was changed from 100:0.2:0.02 to 100:0.2:0.05.

**Example 4: Polycrystalline large diameter NMX + polycrystalline small diameter NMX + GB (Al$_2$O$_3$@Gr composite) 0.2 wt% + CNT 0.1 wt%**

A composite cathode active material was prepared in substantially the same manner as in Example 1, except that the mixing ratio of NMX, the composite, and carbon nanotubes was changed from 100:0.2:0.02 to 100:0.2:0.1.

**Reference Example 1: Polycrystalline large diameter NMX + polycrystalline small diameter NMX + GB (Al$_2$O$_3$@Gr composite) 0.2 wt%**

The polycrystalline large diameter LiNi$_{0.75}$Mn$_{0.22}$Al$_{0.03}$O$_2$ (referred to herein as large diameter NMX) having an average particle diameter of 10 $\mu$m and the composite prepared in Preparation Example 1 were milled for about 5 minutes to about 30 minutes at a rotational speed of about 1000 rpm to about 2000 rpm using a Nobilta Mixer (Hosokawa, Japan) to obtain a 1st core/shell structure. Large diameter NMX and the composite were mixed together in a ratio of 99.8: 0.2. Large diameter NMX is a secondary particle having a structure in which a plurality of primary plate particles are radially arranged. The long axes of a plurality of primary plate particles included in the large diameter NMX had a radially arranged structure.
The polycrystalline small diameter LiNi$_{0.75}$Mn$_{0.22}$Al$_{0.03}$O$_2$ (hereinafter referred to as small diameter NMX) having an average particle diameter of 3.5 $\mu$m and the composite prepared in Preparation Example 1 were milled for about 5 minutes to about 30 minutes at a rotational speed of about 1000 rpm to about 2000 rpm using a Nobilta Mixer (Hosokawa, Japan) to obtain a 2nd core/shell structure. Small diameter NMX and composite were mixed together at a ratio of 99.8: 0.2. The long axes of a plurality of primary plate particles included in the small diameter NMX had a radially arranged structure.
A composite cathode active material was prepared by mixing together the 1st core/shell structure and the 2nd core/shell structure at a weight ratio of 92:8.
As a result of measuring the particle size distribution using a PSA, it was confirmed that it had a bimodal particle size distribution.

**Comparative Example 1: Single crystal large diameter NMX + single crystal small diameter NMX + uncoated**

A composite cathode active material was prepared in substantially the same manner as in Example 1, except that single crystal large diameter NMX obtained according to Preparation Example 5 was used instead of the 1st core/shell structure and single crystal small diameter NMX obtained according to Preparation Example 6 was used instead of the 2nd core/shell structure.
A composite cathode active material was prepared by mixing together large diameter NMX and small diameter NMX at a weight ratio of 92:8.
As a result of measuring the particle size distribution using a PSA, it was confirmed that it had a bimodal particle size distribution.

**Comparative Example 2**

A composite cathode active material was prepared in substantially the same manner as in Example 1, except that the composite prepared in Comparative Preparation Example 1 was used instead of the composite prepared in Preparation Example 1.

**Manufacture of lithium battery (half-cell), dry type**

**Example 5**

**Preparation of cathode**

The composite cathode active material prepared in Example 1, which is the dry cathode active material, the carbon conductive material (Denka Black), which is the dry coating material, and the polytetrafluoroethylene (PTFE), which is the dry binder, were put into a blade mixer in a weight ratio of 92:4:4, and then the mixture was subjected to primary dry mixing at a speed of 1000 rpm at 25 °C for 10 minutes to prepare a first mixture in which the dry cathode active material, the dry conductive material, and the dry binder were uniformly mixed together.
Then, in order to allow the fiberization of the binder to proceed, the first mixture was additionally secondarily mixed together at a rate of 5000 rpm at 25 °C for 20 minutes to prepare a second mixture. A separate solvent was not used in the preparation of the first mixture and the second mixture.

The prepared second mixture was put into an extruder and extruded to prepare a self-standing film of a cathode active material layer in the form of a sheet. The pressure at the time of extrusion was 50 MPa.

A carbon layer, which is an interlayer, was placed on one side of an aluminium thin film having a thickness of 12 $\mu$m to prepare a first stack in which the interlayer was on one surface of a second cathode current collector.

The interlayer was prepared by coating a composition including a carbon conductive material (Denka black) and polyvinylidene fluoride (PVDF) on an aluminium thin film and then drying the same. The thickness of the interlayer on one surface of the aluminium thin film was about 1 $\mu$m.

A cathode active material layer self-standing film was placed on the interlayer of the prepared first stack and pressed to prepare a cathode.

## Manufacture of coin cells

A coin cell was manufactured using the cathode prepared above, lithium metal, which is a counter electrode, a PTFE separator, and 1.5 M $LiPF_6$ dissolved in ethylene carbonate (EC), ethyl methyl carbonate (EMC), dimethyl carbonate (DMC) (2:1:7 volume ratio), which is an electrolyte.

## Examples 6-8

Coin cells were manufactured in substantially the same manner as in Example 5, except that the composite cathode active materials of Examples 2-4 were used instead of the composite cathode active material of Example 1 when preparing the cathode.

## Reference Example 2

Coin cells were manufactured in substantially the same manner as in Example 5, except that the composite cathode active materials of Reference Example 1 were used instead of the composite cathode active material of Example 1 when preparing the cathode.

## Comparative Example 3

A coin cell was manufactured in substantially the same manner as in Reference Example 2, except that the composite cathode active material of Comparative Example 1 was used instead of the composite cathode active material of Example 1 when preparing the cathode.

## Comparative Example 4

A coin cell was manufactured in substantially the same manner as in Reference Example 2, except that the composite cathode active material of Comparative Example 2 was used instead of the composite cathode active material of Example 1 when preparing the cathode.

## Evaluation Example 1: Room-temperature discharge high-rate characteristics evaluation

Each of the lithium batteries manufactured in Examples 5 to 8 and Reference Example 2, and Comparative Example 3 was charged with a constant current of 0.1 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current of 0.1 C rate until the voltage reached 3.0 V (vs. Li) (formation cycle).

Each of the lithium batteries which had undergone the formation cycle, was charged with a constant current of 0.2 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current at a rate of 0.2 C until the voltage reached 3.0 V (vs. Li) (1st cycle).

Each of the lithium batteries which had undergone the 1st cycle, was charged with a constant current of 0.2 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current at a rate of 0.5 C until the voltage reached 3.0 V (vs. Li) (2nd cycle).

Each of the lithium batteries which had undergone the 2nd cycle, was charged with a constant current of 0.2 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current at a rate of 1.0 C until the voltage reached 3.0 V (vs. Li) (3rd cycle).

Each of the lithium batteries which had undergone the 3rd cycle, was charged with a constant current of 0.2 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current at a rate of 2.0 C until the voltage reached 3.0 V (vs. Li) (4th cycle).

In all charge/discharge cycles, a 10-minute stop time was provided after every charge/discharge cycle. Some of the room temperature charge/discharge test results are shown in Table 1 and Table 2 below. The results in Table 1 below are for the case where L/L of the cathode is 10 mg/cm$^2$, and the high rate characteristics are defined by Equation 1 below.

Equation 1

Discharge high-rate characteristics [%] = [0.5 C, 1 C or 2 C rate discharge capacity

(discharge capacity during one of the 2nd to 5th cycles) / 0.2 C rate discharge capacity

(1st cycle discharge capacity)] × 100%

Table 1

| Class | Discharge high-rate characteristic [%] | | | |
|---|---|---|---|---|
| | 0.2 C | 0.5 C | 1 C | 2 C |
| Example 5: 0.2 % GB + 0.02 % TWCNT | 100.0 | 95.5 | 91.2 | 86.2 |
| Example 6: 0.2 % GB + 0.03 wt% TWCNT | 100.0 | 95.6 | 91.4 | 86.8 |
| Example 7: 0.2 % GB + 0.05 % TWCNT | 100.0 | 95.4 | 91.4 | 86.5 |
| Example 8: 0.2 % GB + 0.1 % TWCNT | 100.0 | 95.4 | 91.2 | 86.4 |
| Comparative Example 3: Bare (CP8) | 100.0 | 94.8 | 90.3 | 84.6 |
| Reference Example 2: 0.2 % GB | 100.0 | 94.9 | 90.4 | 84.7 |

As shown in Table 1, the lithium batteries of Examples 5 to 8 have improved discharge high-rate characteristics compared to the lithium batteries of Comparative Example 3 and Reference Example 2.

Although not shown in Table 1, it was confirmed that the lithium battery of Comparative Example 4 had lower discharge capacity and discharge high-rate characteristics than the lithium batteries of Examples 5 to 8.

Evaluation Example 2: Room temperature charge high-rate characteristic evaluation

Each of the lithium batteries manufactured in Examples 5 to 8 and Reference Example 2, and Comparative Example 3 was charged with a constant current of 0.1 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current of 0.1 C rate until the voltage reached 3.0 V (vs. Li) (formation cycle).

The lithium battery that had undergone the formation cycle, was charged with a constant current at 25 °C at a rate of 0.2 C until the voltage reached 4.45 V (vs. Li). Subsequently, the lithium batteries were discharged at a constant current at a rate of 0.2 C until the voltage reached 3.0 V (vs. Li) (1st cycle).

The lithium battery that had undergone the 1st cycle, was charged with a constant current at 25 °C at a rate of 0.5 C until the voltage reached 4.45 V (vs. Li). Subsequently, the lithium batteries were discharged at a constant current at a rate of 0.2 C until the voltage reached 3.0 V (vs. Li) (2nd cycle).

The lithium battery that had undergone the 2nd cycle, was charged with a constant current at 25 °C at a rate of 1.0 C until the voltage reached 4.45 V (vs. Li). Subsequently, the lithium batteries were discharged at a constant current at a rate of 0.2 C until the voltage reached 3.0 V (vs. Li) (3rd cycle).

The lithium battery that had undergone the 3rd cycle, was charged with a constant current at 25 °C at a rate of 2.0 C until the voltage reached 4.45 V (vs. Li). Subsequently, the discharge was performed with a constant current at a rate of 0.2 C until the voltage reached 3.0 V (vs. Li) during discharge (4th cycle).

In all charge/discharge cycles, a 10-minute stop time was provided after every charge/discharge cycle. Some of the room temperature charge and discharge test results are shown in Tables 3 and 4 below. The results in Table 2 below are for the case where L/L of the cathode is 10 mg/cm$^2$, and the high rate characteristics are defined by Equation 2 below.

Equation 2

Charge high rate characteristics [%] = [0.5 C, 1 C or 2 C rate charge capacity (charge capacity during one of the 2$^{nd}$ to 5$^{th}$ cycles) / 0.2 C rate charge capacity (1$^{st}$ cycle charge capacity)] × 100%

Table 2

| Examples | Charging high-rate characteristic [%] | | | |
|---|---|---|---|---|
| | 0.2 C | 0.5 C | 1 C | 2 C |
| Example 5: 0.2 % GB + 0.02 % TWCNT | 100.0 | 95.3 | 93.3 | 90.6 |
| Example 6: 0.2 % GB + 0.03 wt% TWCNT | 100.0 | 95.4 | 93.5 | 90.6 |
| Example 7: 0.2 % GB + 0.05 % TWCNT | 100.0 | 95.1 | 93.3 | 90.5 |
| Example 8: 0.2 % GB + 0.1 % TWCNT | 100.0 | 95.2 | 93.3 | 90.5 |
| Comparative Example 3: Bare (CP8) | 100.0 | 95.2 | 93.2 | 90.2 |
| Reference Example 2: 0.2 % GB | 100.0 | 95.1 | 93.1 | 90.0 |

As shown in Table 2, the lithium batteries of Examples 5-8 are expected to have improved charging capacity and charging high-rate characteristics, especially rapid charging characteristics, compared to the lithium batteries of Comparative Example 3 and Reference Example 2.

Although not shown in Table 2, it was confirmed that the lithium battery of Comparative Example 4 had lower charging capacity and charging high-rate characteristics than the lithium batteries of Examples 5 to 8.

**Evaluation Example 3: High-temperature (45 °C) charge/discharge characteristics Evaluation**

Each of the lithium batteries manufactured in Example 5, Reference Example 2, and Comparative Example 3 was charged with a constant current of 0.2 C rate at 25 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current of 0.2 C rate until the voltage reached 3.0 V (vs. Li) (formation cycle).

Each of the lithium batteries which had undergone the formation cycle, was charged with a constant current of 1 C rate at 45 °C until a voltage reached 4.45 V (vs. Li), and was then cut-off at a current of 0.05 C rate while maintaining the voltage at 4.45 V in a constant voltage mode. Subsequently, the lithium batteries were discharged at a constant current at a rate of 1 C until the voltage reached 3.0 V (vs. Li) (1$^{st}$ cycle). This cycle was repeated under the same conditions up to the 50$^{th}$ cycle.

In all charge/discharge cycles, a 10-minute stop time was provided after every charge/discharge cycle. Some of the results of the charging and discharging experiments at high temperature are shown in Table 6. The capacity retention rate is defined by Equation 4 below.

Equation 4

Capacity retention ratio [%] = [discharge capacity in 50$^{th}$ cycle/discharge capacity in 1$^{st}$ cycle] × 100%

**Evaluation Example 4: Direct current internal resistance (DC-IR) evaluation before and after high-temperature charging and discharging**

For the lithium batteries prepared in Examples 5 to 8, Comparative Example 3, and Reference Example 2, DC-IR was measured by the following methods, respectively, before and after high-temperature charge-discharge evaluation.

In the 1st cycle, charging was performed with a constant current at the rate of 0.2 C until a voltage reached 4.45 V (vs. Li), and was then cut-off at a current of 0.05 C rate while maintaining the voltage at 4.45 V in a constant voltage mode. Subsequently, the lithium batteries were discharged with a constant current at the rate of 0.2 C until the voltage reached 3.0 V (vs. Li) (formation step). In the 2nd cycle, charging was performed at the rate of 0.2 C with constant current until a voltage reached 4.45 V (vs. Li), and then, was cut-off at a current of 0.05 C rate while maintaining the voltage of 4.45 V in a constant voltage mode. Thereafter, discharging was performed at the rate of 0.2 C for 2 hours and 30 minutes to reach the state-of-charge (SOC) of 50%. Then, discharging was performed at the rate of 3 C for 10 seconds, followed by constant-current discharging at the rate of 0.2 C for 10 seconds and constant-current discharging at the rate of 3 C for 10 seconds.

Direct current internal resistance (DC-IR, $R = \Delta V/\Delta I$) was calculated from the ratio of average voltage change ($\Delta V$) and average current change ($\Delta I$) during constant current discharging at each C-rate, and average values thereof were calculated.

Table 3 shows some of the measured high-temperature charge/discharge lifetime evaluation and direct current internal resistance measurement results. The results in Table 3 below are for the case where the L/L of the cathode is 10 mg/cm$^2$,

Table 3

| Examples | 45°C lifetime (%) | DC-IR SOC50 ($\Omega$) (once) |
|---|---|---|
| Example 5 | 96.5 | 6.02 |
| Example 6 | 96.5 | 5.56 |
| Example 7 | 96.6 | 6.01 |
| Example 8 | 96.6 | 6.04 |
| Comparative Example 3 | 94.7 | 6.16 |
| Reference Example 2 | 96.3 | 6.10 |

As shown in Table 3, it can be seen that the lithium batteries of Examples 5, 6 and 8 have improved high-temperature life characteristics and DC-IR increase ratios compared to the lithium batteries of Comparative Example 3 and Reference Example 2. If compared to the lithium battery of Reference Example 2, the lithium battery of Example 7 showed improved high-temperature characteristics. This result is because the composite forms a coating layer that stably attaches CNTs to the surface of the cathode active material so that CNTs are not easily detached therefrom.

Compared to the lithium battery of Example 5, the lithium battery of Comparative Example 3 had poor lifespan characteristics at high temperatures. This is because, in the case of the lithium battery of Comparative Example 3, a coating film was not formed on the NMX core so that the side reactions of the NMX core and electrolyte could not be effectively blocked.

Compared to the lithium battery of Example 5, the lithium battery of Reference Example 2 had poor lifespan characteristics at high temperatures.

Evaluation Example 5: SEM, HR-TEM and SEM-EDS analysis

Scanning electron microscope, high-resolution transmission electron microscope, and energy-dispersive X-ray spectroscopy (EDS) analysis were performed on the composite prepared in Preparation Example 1, the composite cathode active material prepared in Example 1, and the composite cathode active material prepared in Comparative Example 1.

For SEM-EDS analysis, Philips' FEI Titan 80-300 was used.

The composite prepared in Preparation Example 1 demonstrated a structure in which $Al_2O_3$ particles and its reduction product, $Al_2O_z$ ($0<z<3$) particles, were embedded in graphene. It was confirmed that a graphene layer was positioned outside one or more particles selected from $Al_2O_3$ particles and $Al_2O_z$ ($0<z<3$) particles. One or more particles selected from $Al_2O_3$ particles and $Al_2O_z$ ($0<z<3$) particles were uniformly dispersed in the matrix of graphene. The particle diameter of one or more particles selected from $Al_2O_3$ particles and $Al_2O_z$ ($0<z<3$) particles was about 20 nm. The particle diameter of the composite prepared in Preparation Example 1 was about 50 nm to about 200 nm. It was confirmed that a shell formed by a composite including graphene was on the NMX core in the composite cathode active material prepared in Example 1.

The SEM-EDS mapping analysis of the composite cathode active materials prepared in Comparative Example 1 and Example 1 showed that compared to the surface of the composite cathode active material of Comparative Example 1, the concentration of aluminium (Al) distributed on the surface of the composite cathode active material of Example 1 was increased.

It was confirmed that the composite prepared in Preparation Example 1 was uniformly coated on the NMX core to form a shell in the composite cathode active material of Example 1.

**Evaluation Example 6: XPS spectrum evaluation (graphene-NMX chemical bond)**

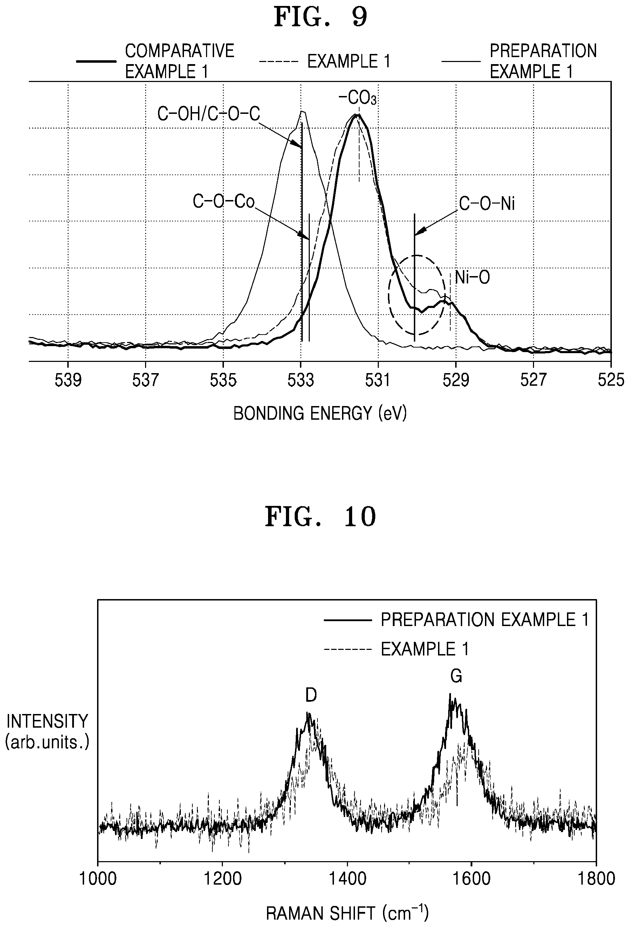

Regarding the composite prepared in Preparation Example 1, the NMX in Comparative Example 1, and the composite cathode active material prepared in Example 1, the XPS spectrum for the O 1s orbital was measured using Quantum 2000 (Physical Electronics), and results are shown in FIG. 9.

As shown in FIG. 9, peaks resulting from C-O-Ni bonds were observed around 530.2 eV for the composite cathode active material of Example 1. These peaks were determined to be due to bonds formed between the NiO phase present on the surface of NCM and carbon of graphene. Therefore, it was confirmed that the graphene included in the shell formed on the core formed a covalent bond with Ni, as a transition metal included in the core.

**Evaluation Example 7: Raman spectrum evaluation (graphene-NMX chemical bond)**

Raman spectra were measured for the composite prepared in Preparation Example 1 and the composite cathode active material prepared in Example 1, and results are shown in FIG. 10.

As shown in FIG. 10, the composite prepared in Preparation Example 1 exhibited a D band peak at 1338.7 $cm^{-1}$ and a G band peak at 1575.0 $cm^{-1}$, resulting from graphene.

In the embodiment of the composite cathode active material of Example 1, due to the shell including graphene, the D band peak shifted to 1351.3 $cm^{-1}$ by about 12 $cm^{-1}$ and the G band peak shifted to 1593.6 $cm^{-1}$ by about 18 $cm^{-1}$.

While the present disclosure is not limited by any particular mechanism or theory, the shift of the D-band peak seems to occur due to the strain of graphene bonded to the core by milling to form a shell.

The shift of the G band peak seems to occur due to charge transfer between the core and graphene in the composite by the formation of a composite formed by a core and graphene through C-O-Ni bond. Therefore, it was confirmed that the graphene included in the shell formed on the core formed a covalent bond with Ni, as a transition metal included in the core.

According to one aspect of some embodiments, a composite cathode active material has a shell containing a first metal oxide, a first carbon-based material, and a second carbon-based material, and thus, a lithium battery including the composite cathode active material has improved high-temperature cycle characteristics, suppression or reduction of an increase in internal resistance, and improved high-rate characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims, and equivalents thereof.

The present invention may be defined by reference to the following clauses:

Clause 1. A composite cathode active material comprising:

a 1st core comprising a first lithium transition metal oxide;
a 2nd core comprising a second lithium transition metal oxide; and
a shell over a surface of at least one selected from the 1st core and the 2nd core, wherein:

the shell comprises at least one first metal oxide, a first carbon-based material, and a second carbon-based material,
the at least one first metal oxide is included within a matrix of the first carbon-based material,
the at least one first metal oxide is represented by Formula $M_aO_b$ ($0<a\leq3$ and $0<b<4$, wherein if a is 1, 2, or 3, b is not an integer), wherein M is at least one metal selected from Group 2 to Group 13, Group 15, and Group 16 of the Periodic Table of the Elements,

the second carbon-based material comprises a fibrous carbon-based material having an aspect ratio of at least 10, and
the first lithium transition metal oxide and the second lithium transition metal oxide have different particle diameters from each other.

Clause 2. The composite cathode active material of clause 1, wherein each of the first lithium transition metal oxide and the second lithium transition metal oxide comprises a secondary particle comprising a plurality of primary particles.

Clause 3. The composite cathode active material of clause 1 or clause 2, wherein the first lithium transition metal oxide is a large-diameter lithium transition metal oxide having a particle diameter greater than that of the second lithium transition metal oxide,

the second lithium transition metal oxide is a small-diameter lithium transition metal oxide having a particle diameter smaller than that of the first lithium transition metal oxide, and
the first lithium transition metal oxide and the second lithium transition metal oxide each have a polycrystalline structure.

Clause 4. The composite cathode active material of any one of clauses 1 to 3, wherein the first lithium transition metal oxide and the second lithium transition metal oxide each have a bimodal particle diameter distribution in a particle size distribution, and
a particle diameter ratio of the first lithium transition metal oxide and the second lithium transition metal oxide is 2.5:1 to 40:1.

Clause 5. The composite cathode active material of any one of clauses 1 to 4, wherein the particle diameter of the first lithium transition metal oxide is about 3 $\mu$m to about 15 $\mu$m, and the particle diameter of the second lithium transition metal oxide is at least 1 $\mu$m and less than 7 $\mu$m.

Clause 6. The composite cathode active material of any one of clauses 1 to 5, wherein a weight ratio of the first lithium transition metal oxide and the second lithium transition metal oxide is 92:8 to 60:40.

Clause 7. The composite cathode active material of any one of clauses 1 to 6, wherein the shell is only on the 1st core,

the shell is only on the 2nd core, or the shell is on both the 1st core and the 2nd core, and
an amount of the shell is not more than 5 wt% of the total weight of the composite cathode active material.

Clause 8. The composite cathode active material of any one of clauses 1 to 7, wherein an amount of the second carbon-based material is 1 wt% or less, based on the total weight of the composite cathode active material,

an amount of the second carbon-based material is about 0.1 wt% to about 50 wt%, based on the total weight of the first carbon-based material and the second carbon-based material,
the second carbon-based material comprises carbon nanofibers, carbon nanotubes, or a combination thereof, and
the second carbon-based material is on a surface of the composite cathode active material.

Clause 9. The composite cathode active material of clause 8, wherein the carbon nanotubes comprise a carbon nanotube primary structure, a carbon nanotube secondary structure, which is an aggregate of a plurality of carbon nanotube primary particles, or a combination thereof,

the carbon nanotube primary structure is one carbon nanotube unit,
the carbon nanotube primary structure comprises a single-walled carbon nanotube (SWCNT), a double-walled carbon nanotube (DWCNT), a multi-walled carbon nanotube (MWCNT), or a combination thereof,
a diameter of the carbon nanotube primary structure is about 1 nm to about 20 nm, a length of the carbon nanotube primary structure is about 100 nm to about 2 $\mu$m,
the carbon nanotube secondary structure comprises bundle-type carbon nanotubes, rope-type carbon nanotubes, or a combination thereof, and
a diameter of the carbon nanotube secondary structure is about 2 nm to about 50 nm, and a length of the carbon nanotube secondary structure is about 500 nm to about 1000 $\mu$m.

Clause 10. The composite cathode active material of any one of clauses 1 to 9, wherein a first metal included in the at least one first metal oxide is at least one metal selected from Al, Nb, Mg, Sc, Ti, Zr, V, W, Mn, Fe, Co, Pd, Cu, Ag, Zn, Sb, and Se, and

the at least one first metal oxide comprises at least one selected from $Al_2O_z$ ($0<z<3$), $NbO_x$ ($0<x<2.5$), $MgO_x$ ($0<x<1$), $Sc_2O_z$ ($0<z<3$), $TiO_y$ ($0<y<2$), $ZrO_y$ ($0<y<2$), $V_2O_z$ ($0<z<3$), $WO_y$ ($0<y<2$), $MnO_y$ ($0<y<2$), $Fe_2O_z$ ($0<z<3$), $Co_3O_w$ ($0<w<4$), $PdO_x$ ($0<x<1$), $CuO_x$ ($0<x<1$), $AgO_x$ ($0<x<1$), $ZnO_x$ ($0<x<1$), $Sb_2O_z$ ($0<z<3$), and $SeO_y$ ($0<y<2$).

Clause 11. The composite cathode active material of any one of clauses 1 to 10, wherein the shell further comprises a second metal oxide represented by $M_aO_c$ ($0<a\leq3$ and $0<c\leq4$, wherein if a is 1, 2, or 3, c is an integer),

the second metal oxide comprises metal which is the same as that included in the first metal oxide, and c/a, which is a ratio of a and c of the second metal oxide, has a greater value than b/a, which is a ratio of a and b of the at least one first metal oxide, wherein the second metal oxide is selected from $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$, and the at least one first metal oxide is a reduction product of the second metal oxide.

Clause 12. The composite cathode active material of clause 11, wherein the shell comprises the first carbon-based material provided in a direction protruding from a surface of at least one selected from the at least one first metal oxide and the second metal oxide, and a thickness of the shell is about 1 nm to about 5 $\mu$m.

Clause 13. The composite cathode active material of any one of clauses 1 to 12, wherein the shell comprises at least one selected from: a composite comprising the at least one first metal oxide, the first carbon-based material, and the second carbon-based material; and milling product of the composite, and an amount of the at least one selected from the composite and milling product of the composite is about 0.01 wt% to about 5 wt%, based on the total weight of the composite cathode active material.

Clause 14. The composite cathode active material of any one of clauses 1 to 13, wherein the lithium transition metal oxide is represented by a formula selected from Formulae 1 to 8:

Formula 1        $Li_aNi_xMn_yM'_zO_{2-b}A_b$

wherein, in Formula 1,

$1.0\leq a\leq1.2$, $0\leq b\leq0.2$, $0<x\leq0.85$, $0.1\leq y<0.3$, $0<z\leq0.1$, and $x+y+z=1$,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

Formula 2        $LiNi_xCo_yMn_zO_2$,

Formula 3        $LiNi_xCo_yAl_zO_2$,

wherein, in Formulae 2 and 3, $0.8\leq x\leq0.95$, $0\leq y\leq0.2$, $0<z\leq0.2$ and $x+y+z=1$,

Formula 4        $LiNi_xCo_yMn_zAl_wO_2$

wherein, in Formula 4, $0.8\leq x\leq0.95$, $0\leq y\leq0.2$, $0<z\leq50.2$, $0<w\leq0.2$, and $x+y+z+w=1$,

Formula 5        $Li_aCO_xM_yO_{2-b}A_b$

wherein, in Formula 5,

$1.0\leq a\leq1.2$, $0\leq b\leq0.2$, $0.9\leq x\leq1$, $0\leq y\leq0.1$, and $x+y=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

$$\text{Formula 6} \qquad Li_aNi_xCo_yM_zO_{2-b}A_b$$

wherein, in Formula 6,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

$$\text{Formula 7} \qquad Li_aM1_xM2_yPO_{4-b}X_b$$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof,

$$\text{Formula 8} \qquad Li_aM3_zPO_4$$

wherein, in Formula 8, $0.90 \leq a \leq 1.1$, $0.9 \leq z \leq 1.1$, and
M3 is chromium (Cr), manganese (Mn), iron (Fe), cobalt (Co), nickel (Ni), copper (Cu), zirconium (Zr), or a combination thereof.

Clause 15. A cathode comprising the composite cathode active material of any one of clauses 1 to 14.

Clause 16. A lithium battery comprising:

the cathode of clause 15; an anode; and
an electrolyte between the cathode and the anode.

Clause 17. The lithium battery of clause 16, wherein the electrolyte is a liquid electrolyte, a solid electrolyte, a gel electrolyte or a combination thereof.

Clause 18. The lithium battery of clause 17, wherein the solid electrolyte is an oxide-based solid electrolyte, a sulfide-based solid electrolyte, a polymer solid electrolyte or a combination thereof, and the gel electrolyte comprises a polymer gel electrolyte.

Clause 19. The lithium battery of any one of clauses 16 to 18, wherein the cathode comprises a cathode current collector, the anode comprises an anode current collector, and at least one selected from the cathode current collector and the anode current collector comprises a base film and a metal layer on one surface or opposite surfaces of the base film,

the base film comprises a polymer, and the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or alloys thereof.

Clause 20. A method of preparing a composite cathode active material, the method comprising:

providing a first lithium transition metal oxide; providing a second lithium transition metal oxide; providing a composite;

providing a second carbon-based material;
obtaining a 1st core/shell structure by mechanically milling the first lithium transition metal oxide, the composite, and the second carbon-based material;
obtaining a 2nd core/shell structure by mechanically milling the second lithium transition metal oxide, the composite, and the second carbon-based material; and
obtaining a composite cathode active material by mixing together the 1st core/shell structure and the 2nd core/shell structure, wherein:

the composite comprises: at least one first metal oxide represented by Formula $M_aO_b$ ($0 < a \leq 3$ and $0 < b < 4$, wherein if a is 1, 2, or 3, b is not an integer); and a first carbon-based material,
the at least one first metal oxide is inside a matrix of the first carbon-based material, M is at least one metal selected from Group 2 to Group 13, Group 15, and Group 16 of the Periodic Table of the Elements,
the second carbon-based material comprises fibrous carbon having an aspect ratio of at least 10, and
the first lithium transition metal oxide and the second lithium transition metal oxide have different particle diameters from each other.

**Claims**

1. A composite cathode active material comprising:

a 1st core comprising a first lithium transition metal oxide;
a 2nd core comprising a second lithium transition metal oxide; and
a shell over a surface of at least one selected from the 1st core and the 2nd core, wherein:

the shell comprises at least one first metal oxide, a first carbon-based material, and a second carbon-based material,
the at least one first metal oxide is included within a matrix of the first carbon-based material,
the at least one first metal oxide is represented by Formula $M_aO_b$ ($0<a\leq3$ and $0<b<4$, wherein if a is 1, 2, or 3, b is not an integer), wherein M is at least one metal selected from Group 2 to Group 13, Group 15, and Group 16 of the Periodic Table of the Elements,
the second carbon-based material comprises a fibrous carbon-based material having an aspect ratio of at least 10, and
the first lithium transition metal oxide and the second lithium transition metal oxide have different particle diameters from each other.

2. The composite cathode active material as claimed in claim 1, wherein each of the first lithium transition metal oxide and the second lithium transition metal oxide comprises a secondary particle comprising a plurality of primary particles.

3. The composite cathode active material as claimed in claim 1 or claim 2, wherein the first lithium transition metal oxide is a large-diameter lithium transition metal oxide having a particle diameter greater than that of the second lithium transition metal oxide,

the second lithium transition metal oxide is a small-diameter lithium transition metal oxide having a particle diameter smaller than that of the first lithium transition metal oxide, and
the first lithium transition metal oxide and the second lithium transition metal oxide each have a polycrystalline structure.

4. The composite cathode active material as claimed in any one of claims 1 to 3, wherein the first lithium transition metal oxide and the second lithium transition metal oxide have a bimodal particle diameter distribution in a particle size distribution, and
a particle diameter ratio of the first lithium transition metal oxide and the second lithium transition metal oxide is 2.5:1 to 40:1.

5. The composite cathode active material as claimed in any one of claims 1 to 4, wherein the particle diameter of the first lithium transition metal oxide is about 3 $\mu$m to about 15 $\mu$m, and the particle diameter of the second lithium transition metal oxide is at least 1 $\mu$m and less than 7 $\mu$m.

**6.** The composite cathode active material as claimed in any one of claims 1 to 5, wherein a weight ratio of the first lithium transition metal oxide and the second lithium transition metal oxide is 92:8 to 60:40.

**7.** The composite cathode active material as claimed in any one of claims 1 to 6, wherein the shell is only on the 1st core,

the shell is only on the 2nd core, or the shell is on both the 1st core and the 2nd core, and/or
an amount of the shell is not more than 5 wt% of the total weight of the composite cathode active material.

**8.** The composite cathode active material as claimed in any one of claims 1 to 7, wherein an amount of the second carbon-based material is 5 wt% or less, based on the total weight of the composite cathode active material,

an amount of the second carbon-based material is about 0.1 wt% to about 50 wt%, based on the total weight of the first carbon-based material and the second carbon-based material,
the second carbon-based material comprises carbon nanofibers, carbon nanotubes, or a combination thereof, and
the second carbon-based material is on a surface of the composite cathode active material;
optionally wherein the carbon nanotubes comprise a carbon nanotube primary structure, a carbon nanotube secondary structure, which is an aggregate of a plurality of carbon nanotube primary particles, or a combination thereof,
the carbon nanotube primary structure is one carbon nanotube unit,
the carbon nanotube primary structure comprises a single-walled carbon nanotube (SWCNT), a double-walled carbon nanotube (DWCNT), a multi-walled carbon nanotube (MWCNT), or a combination thereof,
a diameter of the carbon nanotube primary structure is about 1 nm to about 20 nm, a length of the carbon nanotube primary structure is about 100 nm to about 2 $\mu$m,
the carbon nanotube secondary structure comprises bundle-type carbon nanotubes, rope-type carbon nanotubes, or a combination thereof, and
a diameter of the carbon nanotube secondary structure is about 2 nm to about 50 nm, and a length of the carbon nanotube secondary structure is about 500 nm to about 1000 $\mu$m.

**9.** The composite cathode active material as claimed in any one of claims 1 to 8, wherein a first metal included in the at least one first metal oxide is at least one metal selected from Al, Nb, Mg, Sc, Ti, Zr, V, W, Mn, Fe, Co, Pd, Cu, Ag, Zn, Sb, and Se, and
the at least one first metal oxide comprises at least one selected from $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2).

**10.** The composite cathode active material as claimed in any one of claims 1 to 9, wherein the shell further comprises a second metal oxide represented by $M_aO_c$ (0<a≤3 and 0<c≤4, wherein if a is 1, 2, or 3, c is an integer),

the second metal oxide comprises metal which is the same as that included in the first metal oxide, and
c/a, which is a ratio of a and c of the second metal oxide, has a greater value than b/a, which is a ratio of a and b of the at least one first metal oxide, wherein the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and the at least one first metal oxide is a reduction product of the second metal oxide;
optionally wherein the shell comprises the first carbon-based material provided in a direction protruding from a surface of at least one selected from the at least one first metal oxide and the second metal oxide, and
a thickness of the shell is about 1 nm to about 5 $\mu$m.

**11.** The composite cathode active material as claimed in any one of claims 1 to 10, wherein the shell comprises at least one selected from: a composite comprising the at least one first metal oxide, the first carbon-based material, and the second carbon-based material; and milling product of the composite, and
an amount of the at least one selected from the composite and milling product of the composite is about 0.01 wt% to about 5 wt%, based on the total weight of the composite cathode active material.

**12.** The composite cathode active material as claimed in any one of claims 1 to 11, wherein the lithium transition metal oxide and the second lithium transition metal oxide are represented by a formula selected from Formulae 1 to 8:

$$\text{Formula 1} \qquad \text{Li}_a\text{Ni}_x\text{Mn}_y\text{M'}_z\text{O}_{2-b}\text{A}_b$$

wherein, in Formula 1,

$1.0 \leq a \leq 1.2$, $0 \leq b \leq 0.2$, $0 < x \leq 0.85$, $0.1 \leq y < 0.3$, $0 < z \leq 0.1$, and $x+y+z=1$,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

$$\text{Formula 2} \qquad \text{LiNi}_x\text{Co}_y\text{Mn}_z\text{O}_2,$$

$$\text{Formula 3} \qquad \text{LiNi}_x\text{Co}_y\text{Al}_z\text{O}_2,$$

wherein, in Formulae 2 and 3, $0.8 \leq x \leq 0.95$, $0 \leq y \leq 0.2$, $0 < z \leq 0.2$ and $x+y+z=1$,

$$\text{Formula 4} \qquad \text{LiNi}_x\text{Co}_y\text{Mn}_z\text{Al}_w\text{O}_2$$

wherein, in Formula 4, $0.8 \leq x \leq 0.95$, $0 \leq y \leq 0.2$, $0 < z \leq 0.2$, $0 < w \leq 0.2$, and $x+y+z+w=1$,

$$\text{Formula 5} \qquad \text{Li}_a\text{Co}_x\text{M}_y\text{O}_{2-b}\text{A}_b$$

wherein, in Formula 5,

$1.0 \leq a \leq 1.2$, $0 \leq b \leq 0.2$, $0.9 \leq x \leq 1$, $0 \leq y \leq 0.1$, and $x+y=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

$$\text{Formula 6} \qquad \text{Li}_a\text{Ni}_x\text{Co}_y\text{M}_z\text{O}_{2-b}\text{A}_b$$

wherein, in Formula 6,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and
A is F, S, Cl, Br, or a combination thereof,

$$\text{Formula 7} \qquad \text{Li}_a\text{M1}_x\text{M2}_y\text{PO}_{4-b}\text{X}_b$$

wherein, in Formula 7, $0.90 \leq a \leq 1.1$, $0 \leq x \leq 0.9$, $0 \leq y \leq 0.5$, $0.9 < x+y < 1.1$, and $0 \leq b \leq 2$,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X is O, F, S, P, or a combination thereof,

Formula 8 $\qquad$ $Li_aM3_zPO_4$

wherein, in Formula 8, $0.90 \le a \le 1.1$, $0.9 \le z \le 1.1$, and
M3 is chromium (Cr), manganese (Mn), iron (Fe), cobalt (Co), nickel (Ni), copper (Cu), zirconium (Zr), or a combination thereof.

13. A cathode comprising the composite cathode active material as claimed in any one of claims 1 to 12.

14. A lithium battery comprising:

the cathode as claimed in claim 13; an anode; and
an electrolyte between the cathode and the anode;
optionally wherein:

(i) the electrolyte is a liquid electrolyte, a solid electrolyte, a gel electrolyte or a combination thereof; further optionally wherein the solid electrolyte is an oxide-based solid electrolyte, a sulfide-based solid electrolyte, a polymer solid electrolyte or a combination thereof, and the gel electrolyte comprises a polymer gel electrolyte; and/or
(ii) the cathode comprises a cathode current collector, the anode comprises an anode current collector, and at least one selected from the cathode current collector and the anode current collector comprises a base film and a metal layer on one surface or opposite surfaces of the base film,

the base film comprises a polymer, and the polymer comprises polyethylene terephthalate (PET), polyethylene (PE), polypropylene (PP), polybutylene terephthalate (PBT), polyimide (PI), or a combination thereof, and the metal layer comprises indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or alloys thereof.

15. A method of preparing a composite cathode active material, the method comprising:

providing a first lithium transition metal oxide; providing a second lithium transition metal oxide; providing a composite;
providing a second carbon-based material;
obtaining a 1st core/shell structure by mechanically milling the first lithium transition metal oxide, the composite, and the second carbon-based material;
obtaining a 2nd core/shell structure by mechanically milling the second lithium transition metal oxide, the composite, and the second carbon-based material; and
obtaining the composite cathode active material by mixing together the 1st core/shell structure and the 2nd core/shell structure, wherein:

the composite comprises: at least one first metal oxide represented by Formula $M_aO_b$ ($0 < a \le 3$ and $0 < b < 4$, wherein if a is 1, 2, or 3, b is not an integer); and a first carbon-based material,
the at least one first metal oxide is inside a matrix of the first carbon-based material, M is at least one metal selected from Group 2 to Group 13, Group 15, and Group 16 of the Periodic Table of the Elements,
the second carbon-based material comprises fibrous carbon having an aspect ratio of at least 10, and
the first lithium transition metal oxide and the second lithium transition metal oxide have different particle diameters from each other.

# FIG. 1

# FIG. 2

S4800 5.0kV 8.7mm x100k SE(M)                    500nm

# FIG. 3A

S4800 15.0kV 7.9mm x5.00k SE(M)                  10.0μm

FIG. 3B

## FIG. 4

CAPACITY RETENTION RATIO (%)

○ Bare(COMPARATIVE EXAMPLE 3)
□ 0.2% GB + 0.02% TWCNT(EXAMPLE 5)
△ 0.2% GB + 0.03% TWCNT(EXAMPLE 6)
▽ 0.2% GB + 0.05% TWCNT(EXAMPLE 7)
✕ 0.2% GB + 0.1% TWCNT(EXAMPLE 8)

NUMBER OF CYCLES (#)

## FIG. 5

SPECIFIC CAPACITY (mAh/g)

○ Bare(COMPARATIVE EXAMPLE 3)
□ 0.2% GB + 0.02% TWCNT(EXAMPLE 5)
△ 0.2% GB + 0.03% TWCNT(EXAMPLE 6)
▽ 0.2% GB + 0.05% TWCNT(EXAMPLE 7)
✕ 0.2% GB + 0.1% TWCNT(EXAMPLE 8)

NUMBER OF CYCLES (#)

# FIG. 6

# FIG. 7

# FIG. 8

1

4
2
4
3

7

8

5

# FIG. 9

# FIG. 10

# FIG. 11A

(A)          (B)          (C)

# FIG. 11B